# EUROPÄISCHE PATENTSCHRIFT

(11) **EP 3 431 849 B1**
(45) Veröffentlichungstag und Bekanntmachung des Hinweises auf die Patenterteilung: **16.09.2020**
(21) Anmeldenummer: 17181746.3
(22) Anmeldetag: 17.07.2017
(51) Int. Cl.: F16K 37/00

(54) **VERSCHLEISSERMITTLUNG AN EINEM VENTIL**
DETERMINING WEAR ON A VALVE
DÉTERMINATION D'USURE SUR UNE SOUPAPE

(43) Veröffentlichungstag der Anmeldung: 23.01.2019
(73) Patentinhaber: Siemens Aktiengesellschaft, 80333 München (DE)
(72) Erfinder: Gnoss, Thomas, 76461 Muggensturm (DE); Lochschmied, Rainer, 76287 Rheinstetten-Forchheim (DE); Wetzel, Martin, 76437 Rastatt (DE); Wiegand, Armin, 77839 Lichtenau (DE)
(74) Vertreter: Maier, Daniel Oliver

(56) Entgegenhaltungen:
- EP-A2- 2 202 496
- DE-A1-102013 001 979
- US-A1- 2014 166 264
- US-A1- 2016 223 087
- US-B1- 6 360 773

## Beschreibung

Die vorliegende Offenbarung befasst sich mit einem Ventil zur Einstellung eines Flusses eines gasförmigen und / oder flüssigen Fluides. Insbesondere befasst sich die vorliegende Offenbarung mit der Erkennung von Verschleiss an einem solchen Ventil.

Ventile für gasförmige und / oder flüssige Fluide weisen einen Eingang, einen Ausgang und einen Fluidpfad zwischen Eingang und Ausgang auf. Im Fluidpfad ist ein Ventilelement angeordnet, welches eine geschlossene Position aufweist. In seiner geschlossenen Position verhindert das Ventilelement den Fluss eines Fluides entlang des Fluidpfades zwischen Eingang und Ausgang. Weiterhin weist das Ventilelement mindestens eine geöffnete Position auf. In seiner geöffneten Position ermöglicht das Ventilelement den Fluss eines Fluides entlang des Fluidpfades zwischen Eingang und Ausgang.

In der geschlossenen Position des Ventilelementes liegt ein Ventilteller des Ventilelementes an einem Ventilsitz des Ventilelementes an. Vielfach sind Ventilteller und Ventilsitz gegeneinander gedichtet anhand eines elastischen Elements wie beispielsweise eines O-Rings aus (Silikon- und / oder Butadien-) Gummi. Das elastische Element ist vorteilhaft am Ventilteller und / oder am Ventilsitz montiert.

Das elastische Element unterliegt im Betrieb einer Alterung. Eine nicht vollständig reversible Verschlechterung des Zustandes des elastischen Elements tritt beispielsweise aufgrund einer dauerhaften Verformung ein. Im Falle einer solchen dauerhaften Verformung genügen die Rückstellkräfte des gealterten Elements nicht mehr, um eine durch das Schliessen des Ventilelementes hervorgerufene Verformung rückgängig zu machen. Jene Alterung lässt sich beschleunigen, indem beispielsweise Fluide durch das Ventil strömen, welche das elastische Element chemisch angreifen. Jene Alterung lässt sich weiterhin beschleunigen, indem Fluide mit Temperaturen oberhalb oder unterhalb des für das Dichtelement zulässigen Temperaturbereichs eingesetzt werden. Ferner können überhöhte Drücke eine dauerhafte Schädigung des elastischen Elements bewirken.

Die Patentanmeldung W0O2010/056111A1 offenbart ein Magnetventil mit Sensor zur Bestimmung von Hub / Geschwindigkeiten und / oder Beschleunigungen eines beweglichen Kerns des Ventils als Anzeige für Versagensmodus und Gesundheitsstatus. WO2010/056111A1 ist angemeldet am 12. November 2009 und veröffentlicht am 20. Mai 2010. Die Anordung aus WO2010/056111A1 umfasst einen Sensor 17 zur Bestimmung der Position eines Ventilelementes 8. Zugleich werden Geschwindigkeiten und Beschleunigungen ermittelt.

Die bestimmten Werte werden mit gespeicherten Grenzwerten verglichen. Bei Überschreiten einer ersten Schwelle wird ein Signal als Hinweis auf erforderliche Wartung gesendet.

Ventile sind vielfach hinter Betonwände und / oder Kellerdecken installiert. Die Anordnung aus WO2010/056111A1 ermöglicht nicht zwingend das Senden von Diagnosedaten durch Betonwände und / oder Kellerdecken hindurch. Die Anordnung aus WO2010/056111A1 ist weiterhin nicht optimiert hinsichtlich einer vergleichenden Bewertung des Alterungszustandes über eine Vielzahl von Ventilzyklen.

US2014/0166264 offenbart eine Steuereinheit gemäß dem Oberbegriff des Anspruchs 1.

Ziel der vorliegenden Offenbarung ist die Verbesserung der Diagnose der Alterung von Ventilen für gasförmige und / oder flüssige Fluide, insbesondere Brennstoffe.

### Zusammenfassung

Die vorliegende Offenbarung lehrt ein verbessertes Ventil zur Einstellung von Strömungen gasförmiger und / oder flüssiger Ventile. Das hier offenbarte Ventil umfasst einen Ventilsitz als festes Element und einen Ventilteller als bewegliches Element. Zwischen Ventilsitz und Ventilteller ist ein elastisches Element angebracht. Im geschlossenen Zustand des Ventilelementes dichtet das elastische Element den Ventilsitz gegen den Ventilteller. Ein Sensor, vorzugsweise ein Hubsensor, erfasst die Stellung des Ventiltellers. Ein Zyklenzähler erfasst zudem eine Anzahl an Ventilöffnungen und / oder Ventilschliessungen.

Das hier offenbarte Ventil ist ausgebildet, eine erste Anzahl an Ventilzyklen, das heisst Operationen aus Ventilöffnung und Ventilschliessung, durchzuführen. Nach einer ersten Anzahl an Ventilzyklen wird anhand des Sensors ein erster Zustand des Ventilelementes ermittelt. Danach wird eine zweite Anzahl an Ventilzyklen durchgeführt. Im Anschluss an die Durchführung der zweiten Anzahl an Ventilzyklen wird ein zweiter Zustand des Ventilelementes ermittelt. Der erste Zustand wird nun mit dem zweiten Zustand verglichen. Ggf wird die Differenz aus erstem und zweitem Zustand auf die zweite Anzahl an Ventilzyklen bezogen. Als (direkte) Funktion des ersten Zustandes, des zweiten Zustandes und der Anzahl an Zyklen wird ein Ergebnis gebildet. Das Ergebnis kann Werte annehmen, welche auf einen einwandfreien Ventilzustand und / oder auf einen wartungsbedürftigen Ventilzustand und / oder auf einen defekten Ventilzustand hinweisen.

Das genannte Problem eines verbesserten Ventils wird anhand der Hauptansprüche der vorliegenden Offenbarung angegangen. Besondere Ausführungsformen werden in den abhängigen Ansprüchen behandelt.

Es ist ein verwandtes Ziel der vorliegenden Offenbarung, dass die Ermittlung des ersten Zustandes des Ventilelementes den Empfang eines ersten Signals vom Sensor und / oder die Verarbeitung des empfangenen ersten Signals zu einem ersten Messwert und / oder die Verarbeitung des ersten Messwertes zu einem ersten Zustand umfasst. Die Verarbeitung des empfangenen ersten Signals zu einem ersten Messwert erfolgt vorzugsweise anhand eines Analog-Digital-Wandlers.

Es ist auch ein verwandtes Ziel der vorliegenden Offenbarung, dass die Ermittlung des zweiten Zustandes des Ventilelementes den Empfang eines zweiten Signals vom Sensor und / oder die Verarbeitung des empfangenen zweiten Signals zu einem zweiten Messwert und / oder die Verarbeitung des zweiten Messwertes zu einem zweiten Zustand umfasst. Die Verarbeitung des empfangenen zweiten Signals zu einem zweiten Messwert erfolgt vorzugsweise anhand eines Analog-Digital-Wandlers.

Es ist ein weiteres verwandtes Ziel der vorliegenden Offenbarung, dass die erste Anzahl an Ventilzyklen mindestens einen, mindestens zwei, mindestens fünf oder mindestens zehn Ventilzyklen umfasst. Mithin wird die erste Ermittlung eines Ventilzustandes nicht im Neuzustand durchgeführt.

Es ist auch ein weiteres verwandtes Ziel der vorliegenden Offenbarung, dass die zweite Anzahl an Ventilzyklen mindestens einen, mindestens zwei, mindestens fünf oder mindestens zehn Ventilzyklen umfasst.

Es ist ferner ein Ziel der vorliegenden Offenbarung, dass das Ventil eine Warnanzeige umfasst. Das gebildete Ergebnis wird anhand der Warnanzeige an einen Benutzer ausgegeben. Die Warnanzeige ist vorzugsweise ein Bildschirm und / oder eine Licht-emittierende Diode.

Es ist ferner ein Ziel der vorliegenden Offenbarung, dass das Ventil eine Kommunikationsschnittstelle umfasst. Das gebildete Ergebnis wird anhand der Kommunikationsschnittstelle versendet. Vorzugsweise ist die Kommunikationsschnittstelle ausgebildet zur drahtlosen und / oder zur drahtgebundenen Kommunikation.

Vorzugsweise weist die Kommunikationsschnittstelle ein Kommunikationsbusprotokoll auf und / oder ist kompatibel mit einem Kommunikationsbusprotokoll. Das gebildete Ergebnis wird anhand der Kommunikationsschnittstelle unter Verwendung des Kommunikationsbusprotokolls versendet. Optional wird das gebildete Ergebnis anhand der Kommunikationsschnittstelle unter Verwendung des Kommunikationsbusprotokolls in verschlüsselter Form versendet.

### Kurze Beschreibung der Figuren

Verschiedene Details werden dem Fachmann anhand der folgenden detaillierten Beschreibung zugänglich. Die einzelnen Ausführungsformen sind dabei nicht einschränkend. Die Zeichnungen, welche der Beschreibung beigefügt sind, lassen sich wie folgt beschreiben:
FIG 1 zeigt schematisch ein Ventilelement im neuen oder wenig gealterten Zustand.
FIG 2 zeigt schematisch ein Ventilelement mit einem elastischen Element im gealterten Zustand.
FIG 3 zeigt als Schaubild den Verlauf eines Ventilhubes in Abhängigkeit von Ventilzyklen und / oder Betriebsdauer.
FIG 4 zeigt schematisch die Ankopplung des Ventilelementes an eine Ventilsteuereinheit anhand eines Aktors und eines Sensors.

### Detaillierte Beschreibung

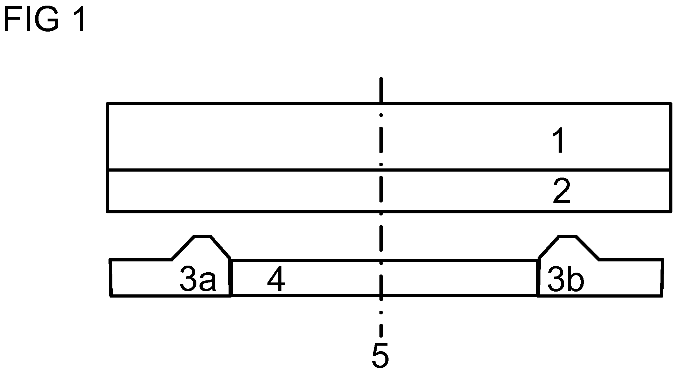

FIG 1 zeigt ein Ventilelement mit einem Ventilteller 1 und einem Ventilsitz 3a, 3b. Am Ventilteller 1 ist ein elastisches Element 2 angebracht. Das elastische Element 2 ist so angeordnet, dass es sich zwischen Ventilteller 1 und Ventilsitz 3a, 3b befindet.

FIG 1 zeigt ein Ventilelement im neuen und / oder wenig gealterten Zustand. Ein solches Ventilelement ist typisch zwischen Eingang und Ausgang eines Ventils im Fluidpfad des Ventils angeordnet. Das Ventilelement weist einen geschlossenen Zustand auf, in welchem es den Fluss eines Fluides entlang des Fluidpfades zwischen Eingang und Ausgang unterbindet. In diesem Zustand liegt das elastische Element 2 zwischen Ventilteller 1 und Ventilsitz 3a, 3b so an, dass der Fluss eines Fluides durch die Öffnung 4 unterbunden wird.

Das Ventilelement weist ferner einen geöffneten Zustand auf, in welchem es einen Fluss eines Fluides entlang des Fluidpfades zwischen Eingang und Ausgang ermöglicht. In diesem Zustand ist das elastische Element 2 vom Ventilsitz 3a, 3b so beabstandet, dass ein Fluss eines Fluides durch die Öffnung 4 hindurchtreten kann.

Idealerweise liegt zwischen dem geöffneten Zustand und dem geschlossenen Zustand ein Kontinuum an Zuständen, in welchen das Ventilelement zu einem bestimmten Prozentsatz geöffnet ist. Dabei entspricht der geschlossene Zustand des Ventilelementes einer Öffnung von 0 Prozent. Der vorgenannte geöffnete Zustand des Ventilelementes entspricht einer Öffnung von 100 Prozent. Gemäss einer speziellen Ausführungsform lässt sich das Ventilelement in einer endlichen Anzahl an diskreten Schritten öffnen und / oder schliessen.

Als Fluide kommen beispielsweise gasförmige und / oder flüssige Fluide in Betracht. Insbesondere kommen brennbare gasförmige und / oder brennbare flüssige Fluide in Betracht. Jene gasförmigen und / oder brennbaren Fluide können eine Vielzahl von Temperaturen und / oder Drücken aufweisen.

Das elastische Element 2 ist in der in FIG 1 gezeigten Ausführungsform am Ventilteller 1 befestigt. Der Fachmann kann das elastische Element 2 mit dem Ventilteller 1 beispielsweise vernieten und / oder das elastische Element 2 am Ventilteller 1 ankleben. Der Fachmann kann das elastische Element 2 weiterhin am Ventilteller 1 anhand einer Schwalbenschwanz-Nut befestigen. Die genannten Möglichkeiten zur Befestigung des elastischen Elements 2 am Ventilteller 1 sind nicht abschliessend.

Das elastische Element 2 ist vorzugsweise aus Kunststoff gefertigt, beispielsweise durch Spritzguss und / oder Extrusion. Als Kunststoffe kommen unter anderem Polymere wie Silikone und / oder Polymere auf Basis von Butadien und / oder Dipolymere oder Terpolymere auf Basis von Hexafluorpropen und 1,1-Difluorethen und / oder Terpolymere auf Basis von Tetrafluorethylen und Hexafluorpropen und 1,1-Difluorethen infrage.

In dem in FIG 1 gezeigten Beispiel ist das elastische Element 2 am Ventilteller 1 befestigt. Der Ventilteller 1 und das elastische Element 2 sind mithin Teil eines beweglichen Elements.

In einer alternativen Ausführungsform ist das elastische Element 2 am Ventilsitz 3a, 3b befestigt. Der Ventilteller 1 und das elastische Element 2 sind mithin Teil eines fixen Elements. Der Fachmann wendet die Lehre aus der vorliegenden Offenbarung auch auf solche Ventilelemente an.

Der Fachmann kann das elastische Element 2 mit dem Ventilsitz 3a, 3b beispielsweise vernieten und / oder das elastische Element 2 am Ventilsitz 3a, 3b ankleben und / oder das elastische Element 2 durch Gummieren am Ventilsitz 3a, 3b anbringen. Der Fachmann kann das elastische Element 2 weiterhin am Ventilsitz 3a, 3b anhand einer Schwalbenschwanz-Nut befestigen. Die genannten Möglichkeiten zur Befestigung des elastischen Elements 2 am Ventilsitz 3a, 3b sind nicht abschliessend.

Der bewegliche Teil 1, 2 des Ventilelementes ist vorzugsweise anhand eines Stössels axial 5 beweglich. Ein Stössel wird dazu mit dem Ventilteller 1 verbunden. Mithin bewegt sich der Stössel gemeinsam mit dem beweglichen Teil 1, 2 des Ventilelementes.

Auf diese Weise kann das Ventilelement durch den Stössel von seiner geöffneten Stellung in seine geschlossene Stellung bewegt werden. Ebenso kann das Ventilelement durch den Stössel von seiner geschlossenen Stellung in seine geöffnete Stellung bewegt werden. Vorzugsweise kann das Ventilelement durch den Stössel auch in ein Kontinuum von Ventilstellungen zwischen der geschlossenen Stellung und der geöffneten Stellung (und umgekehrt) bewegt werden. Gemäss einer speziellen Ausführungsform kann das Ventilelement durch den Stössel in diskreten Schritten zwischen der geschlossenen Stellung und der geöffneten Stellung (und umgekehrt) bewegt werden.

Zum Verstellen des Ventilelementes durch den Stössel ist ein an den Stössel gekoppelter Aktor vorgesehen. Bei dem Aktor kann es sich um einen hydraulischen Antrieb, insbesondere um eine Schwingankerpumpe handeln. Weiterhin kann als Aktor ein (elektrischer, hydraulischer und / oder pneumatischer) Linearmotor zum Einsatz kommen. Ferner ist ein Piezo-Antrieb als Aktor vorgesehen.

Ein Sensor erfasst die Stellung des beweglichen Teils 1, 2 des Ventilelementes. Als Sensor ist insbesondere ein Hubsensor vorgesehen. Beispiele für Sensoren sind ausserdem Hall-Sensoren, Mikroschalter und / oder Lichtschranken. Ein solcher Sensor kann beispielsweise die Bewegung des Stössels, des Aktors und / oder des beweglichen Teils 1, 2 des Ventilelementes aufzeichnen.

FIG 1 zeigt weiterhin ein Ventilelement, dessen beweglicher Teil 1, 2 entlang einer Achse 5 axial verstellbar ist. Der Fachmann zieht neben axial 5 verstellbaren Ventilelementen auch um eine Achse 5 drehbare Ventilelemente in Betracht. Der Fachmann wendet die Lehre aus der vorliegenden Offenbarung auch auf solche Ventilelemente an.

Der Ventilsitz aus FIG 1 weist einen Vorsprung 3a, 3b auf. Der Vorsprung 3a, 3b ist auf den Ventilteller 1 hin gerichtet. Der Vorsprung 3a, 3b verläuft vorzugsweise entlang einer umlaufenden Linie. Besonders bevorzugt ist jene umlaufende Linie geschlossen. Gemäss einer Ausführungsform weist die umlaufende Linie einen ringförmigen Querschnitt auf. Insbesondere ist vorgesehen, dass die umlaufende Linie entlang eines Kreises, einer Ellipse und / oder entlang eines Vielecks verläuft.

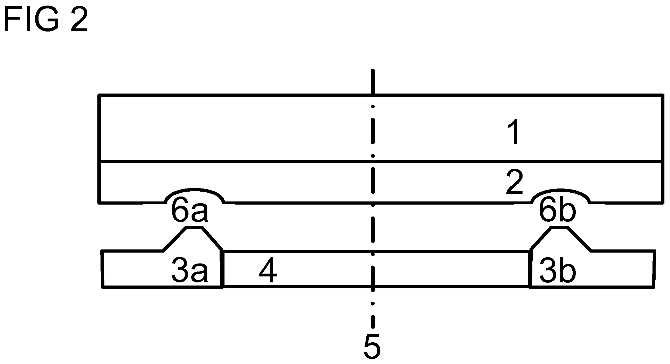

Ein elastisches Element 2 in gealtertem Zustand veranschaulicht FIG 2. Das elastische Element 2 weist in diesem Fall eine Vertiefung 6a, 6b auf, welche (weitgehend) dem Vorsprung 3a, 3b des Ventilsitzes entspricht. Die Vertiefung 6a, 6b ist meist Kennzeichen einer irreversiblen Schädigung des elastischen Elements 2. So hat das elastische Element 2 an den Stellen mit der Vertiefung 6a, 6b seine Elastizität (dauerhaft) eingebüsst. Weiterhin ist möglich, dass die Vertiefung 6a, 6b durch Abrieb während des Öffnens und / oder Schliessens des Ventilelementes entsteht.

Die Vertiefung 6a, 6b verläuft vorzugsweise entlang einer umlaufenden Linie und / oder entlang einer umlaufenden Rille. Besonders bevorzugt ist jene umlaufende Linie und / oder umlaufende Rille geschlossen. Gemäss einer Ausführungsform weist die umlaufende Linie und / oder Rille einen ringförmigen Querschnitt auf. Insbesondere ist vorgesehen, dass die umlaufende Linie und / oder umlaufende Rille entlang eines Kreises, einer Ellipse und / oder entlang eines Vielecks verläuft. Der Fachmann erkennt, dass die Vertiefung 6a, 6b des elastischen Elements 2 in ihrer Form und in ihren Abmessungen (weitgehend) dem Vorsprung 3a, 3b des Ventiltellers entspricht.

Mit zunehmendem Verschleiss des elastischen Elements 2 werden die Vertiefungen 6a, 6b grösser. Die Vergrösserung der Vertiefungen 6a, 6b bewirken auch eine Änderungen der Position des beweglichen Teils 1, 2 des Ventilelementes in seiner geschlossenen Stellung. Der bewegliche Teil 1, 2 des Ventilelementes muss mit fortschreitendem Verschleiss immer weiter in Richtung Ventilteller 3a, 3b bewegt werden, um das Ventilelement (dicht) zu schliessen. Der Fachmann erkennt dabei, dass die Anforderungen an Dichtigkeit von den Begebenheiten der jeweiligen Anwendung, wie beispielsweise als Ventil einer Brennereinrichtung, abhängen.

Die Position des beweglichen Teils 1, 2 in der geschlossenen Stellung des Ventilelementes ist mithin ein Indiz und / oder ein Symptom und / oder ein Mass für die Alterung des elastischen Elements 2. Deshalb ist vorgesehen, die Position des beweglichen Teils 1, 2 anhand des vorgenannten, direkt oder indirekt an den beweglichen Teil 1, 2 gekoppelten, Sensors aufzuzeichnen.

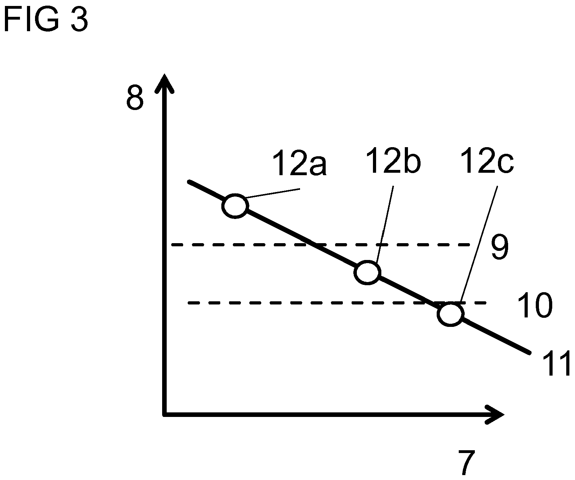

Ein Schaubild der Position 8 des beweglichen Teils 1, 2 in der geschlossenen Stellung ist in FIG 3 wiedergegeben. Dabei ist die Position 8 des beweglichen Teils 1, 2 über der Anzahl an Zyklen 7 und / oder über der Betriebsdauer 7 gezeigt. Der Punkt 12a bezeichnet dabei eine Position 8 des beweglichen Teils 1, 2 des Ventilelementes im neuen und / oder wenig gealterten Zustand.

Mit zunehmender Anzahl an Ventilzyklen 7 und / oder mit zunehmender Betriebsdauer 7 nimmt der Verschleiss in Form grösser werdender Vertiefungen 6a, 6b zu. Entsprechend wird der bewegliche Teil 1, 2 immer weiter in Richtung Ventilsitz 3a, 3b verschoben. Dies äussert sich in FIG 3 in Form immer tieferer Werte der Position 8. So steht Punkt 12b für ein Ventilelement im gealterten Zustand mit einer mittleren Anzahl an Ventilzyklen 7 und / oder einer mittleren Betriebsdauer 7. Die Anzahl an Ventilzyklen 7 und / oder die Betriebsdauer 7 zu Punkt 12b übersteigt die Anzahl an Ventilzyklen 7 und / oder die Betriebsdauer 7 zu Punkt 12a. Entsprechend dem fortgeschrittenen Verschleiss ist die Position 8 zu Punkt 12b tiefer als diejenige zu Punkt 12a.

Punkt 12c in FIG 3 steht für ein Ventilelement im deutlich gealterten Zustand mit einer hohen Anzahl an Ventilzyklen 7 und / oder einer hohen Betriebsdauer 7. Die Anzahl an Ventilzyklen 7 und / oder die Betriebsdauer 7 zu Punkt 12c übersteigt sowohl die Anzahl an Ventilzyklen 7 und / oder die Betriebsdauer 7 zu Punkt 12b als auch die Anzahl an Ventilzyklen 7 und / oder die Betriebsdauer 7 zu Punkt 12a. Entsprechend dem deutlich fortgeschrittenen Verschleiss ist die Position 8 zu Punkt 12c tiefer als diejenige zu Punkt 12b und tiefer als diejenige zu Punkt 12a.

In einer beispielhaften Ausführungsform liegen die Punkte 12a und 12b aus FIG 3 10000 Zyklen, 5000 Zyklen, 2000 Zyklen, 1000 Zyklen und / oder 1000 Betriebsstunden, 500 Betriebsstunden, 200 Betriebsstunden, oder 100 Betriebsstunden auseinander. In einer entsprechenden beispielhaften Ausführungsform liegen die Punkte 12b und 12c aus FIG 3 10000 Zyklen, 5000 Zyklen, 2000 Zyklen, 1000 Zyklen und / oder 1000 Betriebsstunden, 500 Betriebsstunden, 200 Betriebsstunden, oder 100 Betriebsstunden auseinander.

In FIG 3 stehen tiefere Positionen 8 für Positionen des beweglichen Teils 1, 2, welche näher am Ventilsitz 3a, 3b liegen. In diesem Fall ist die Position 8 beispielsweise eine Position, welche vom Ventilteller 3a, 3b aus gemessen in Richtung des beweglichen Teils 1, 2 zunimmt. Der Fachmann erkennt, dass die Richtung der Achse 8 aus FIG 3 auch so gewählt werden kann, dass höhere Positionen 8 für Positionen des beweglichen Teils 1, 2, welche näher am Ventilsitz 3a, 3b liegen, stehen. In jenem Fall ist die Position 8 beispielsweise eine Position, welche vom Ventilteller 3a, 3b aus gemessen in Richtung des beweglichen Teils abnimmt.

Gemäss einer Ausführungsform ändert sich die Position 8 des beweglichen Teils 1, 2 im Laufe der Alterung um maximal 2 Millimeter, bevorzugt um maximal 1 Millimeter, besonders bevorzugt um maximal 0.5 Millimeter. Der Fachmann wählt einen Sensor zur Aufzeichnung der Stellung des beweglichen Teils 1, 2 des Ventilelementes mit entsprechender Genauigkeit und / oder Auflösung. Insbesondere ist vorgesehen, dass der Sensor im Sinne einer Übertastung, beispielsweise einer zweifachen, vierfachen, achtfachen und / oder sechzehnfachen Übertastung, abgefragt wird, um Genauigkeit und / oder Auflösung zu verbessern.

Ebensfalls in FIG 3 gezeigt sind zwei Schwellwerte 9 und 10 der Position 8. Der erste Schwellwert 9 ist ein Symptom und / oder ein Indiz und / oder ein Mass für ein Ventilelement, insbesondere ein elastisches Element 2, im gealterten Zustand. Punkt 12b entspricht einer Position 8 im gealterten Zustand des Ventilelementes, insbesondere im gealterten Zustand des elastischen Elements 2. Gemäss einer Ausführungsform zeigt eine Position des beweglichen Teils 1, 2 jenseits des Schwellwertes 9 an, dass das Ventilelement, insbesondere das elastische Element 2, gewartet werden sollte. Gemäss einer weiteren Ausführungsform zeigt eine Position des beweglichen Teils 1, 2 jenseits des Schwellwertes 9 an, dass das Ventilelement, insbesondere das elastische Element 2, ausgetauscht werden sollte. Gemäss wiederum einer weiteren Ausführungsform zeigt eine Position des beweglichen Teils 1, 2 jenseits des Schwellwertes 9 an, dass für das Ventilelement, insbesondere für das elastische Element 2, noch eine begrenzte Lebensdauer von beispielsweise 1000 Zyklen, 500 Zyklen, 200 Zyklen, 100 Zyklen und / oder 100 Betriebsstunden, 50 Betriebsstunden, 20 Betriebsstunden, oder 10 Betriebsstunden zu erwarten ist.

Der zweite Schwellwert 10 aus FIG 3 ist ein Symptom und / oder ein Indiz und / oder ein Mass für ein Ventilelement, insbesondere ein elastisches Element 2, im deutlich gealterten Zustand. Punkt 12c entspricht einer Position 8 im deutlich gealterten Zustand des Ventilelementes, insbesondere im deutlich gealterten Zustand des elastischen Elements 2. Gemäss einer Ausführungsform zeigt eine Position des beweglichen Teils 1, 2 jenseits des Schwellwertes 10 an, dass das Ventilelement, insbesondere das elastische Element 2, ausgetauscht werden sollte. Gemäss einer weiteren Ausführungsform zeigt eine Position des beweglichen Teils 1, 2 jenseits des Schwellwertes 10 an, dass das Ventilelement, insbesondere das elastische Element 2, verriegelt werden sollte. Gemäss wiederum einer weiteren Ausführungsform zeigt eine Position des beweglichen Teils 1, 2 jenseits des Schwellwertes 10 an, dass für das Ventilelement, insbesondere für das elastische Element 2, noch eine sehr begrenzte Lebensdauer von beispielsweise 10 Zyklen, 5 Zyklen, 2 Zyklen, 1 Zyklus und / oder 1 Betriebsstunde, 0.5 Betriebsstunden, 0.2 Betriebsstunden, oder 0.1 Betriebsstunden zu erwarten ist.

In einer Ausführungsform sind die Positionen 8 der Schwellwerte 9 und 10 um maximal 1 Millimeter, bevorzugt um maximal 0.5 Millimeter, besonders bevorzugt um maximal 0.2 Millimeter, beabstandet. Der Schwellwert 10 ist typisch ein Mass und / oder ein Indiz für Vertiefungen 6a, 6b, welche grösser und / oder ausgeprägter und / oder tiefer sind als die Vertiefungen 6a, 6b zum Schwellwert 9.

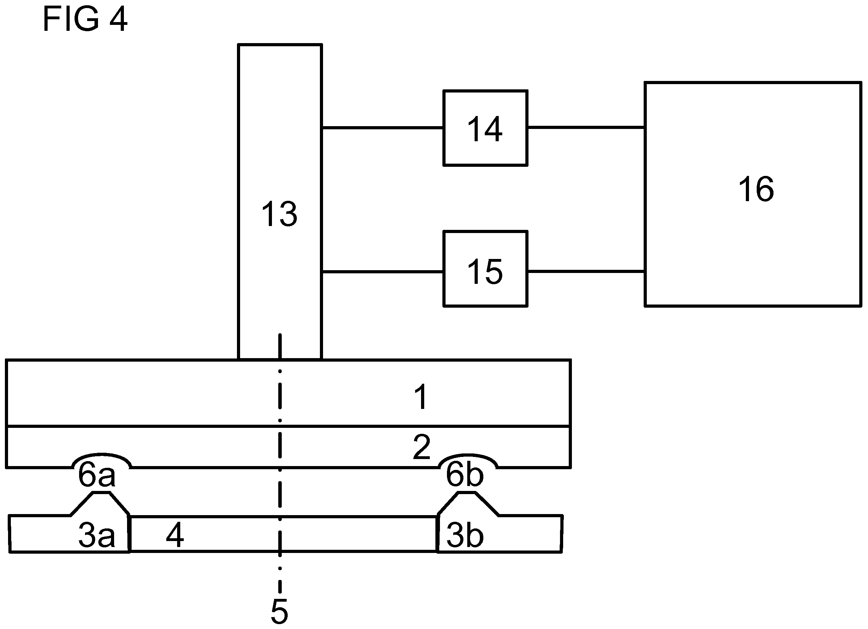

Das hier offenbarte Ventilelement ist wie in FIG 4 veranschaulicht an eine Ventilsteuereinheit 16 gekoppelt. Die Ventilsteuereinheit 16 umfasst vorzugsweise eine verarbeitende Einheit und einen Speicher, insbesondere einen nicht-flüchtigen Speicher. Vorteilhaft ist die Ventilsteuereinheit 16 als Mikroprozessor ausgeführt. In einer speziellen Ausführungsform umfasst die Ventilsteuereinheit 16 einen Mikroprozessor oder ist ein Mikroprozessor.

Zur Ankopplung der Ventilsteuereinheit 16 an das Ventilelement ist in FIG 4 beispielhaft ein Stössel 13 gezeigt. Der Stössel 13 ist wie zuvor ausgeführt mit dem Ventiteller 1 verbunden. Der Stössel 13 lässt sich anhand eines Aktors 14 bewegen, insbesondere axial bewegen. Die Ventilsteuereinheit 16 kommuniziert über eine geeignete Schnittstelle, beispielsweise über eine undirektionale oder bidirektionale Schnittstelle, mit dem Aktor 14. Die Ventilsteuereinheit 16 kommuniziert vorzugsweise über ein Kommunikationsbusprotokoll wie beispielsweise ein digitales und / oder verbindungsloses Kommunikationsbusprotokoll mit dem Aktor 14. In einer speziellen Ausführungsform kommuniziert die Ventilsteuereinheit 16 über einen seriellen Feldbus nach ISO 11898-1:2003 mit dem Aktor 14. In einer weiteren speziellen Ausführungsform kommuniziert die Ventilsteuereinheit 16 über Netzwerkkabel mit integrierter Energieversorgung mit dem Aktor 14. Auf diese Weise lässt sich der Aktor 14 durch die Ventilsteuereinheit 16 gleichzeitig steuern / regeln und mit Energie versorgen.

Der Fachmann erkennt, dass zwischen Ventilsteuereinheit 16 und Aktor 14 eine Treiberstufe angeordnet sein kann. Die Treiberstufe stellt die für den Betrieb des Aktors 14 notwendige Leistung bereit. Der Fachmann erkennt ferner, dass zwischen Ventilsteuereinheit 16 und Aktor 14 ein Digital-Analog-Wandler angeordnet sein kann. Der Digital-Analog-Wandler wandelt ein digitales Signal aus der Ventilsteuereinheit 16 um in ein analoges Signal wie beispielsweise einen Strom oder eine Spannung zum Betrieb des Aktors 14, insbesondere zum Betrieb einer Wicklung des Aktors 14.

In einer vorteilhaften Ausführungsform sind einzelne Bestandteile des Ventils und / oder des Ventilelementes, darunter der Stössel 13 und / oder der Ventilteller 1 und / oder das elastische Element 2 und / oder der Ventilsitz 3a, 3b anhand eines additiven Verfahrens gefertigt. Die genannten Bestandteile können insbesondere anhand eines dreidimensionalen Druckverfahrens gefertigt sein. In einer speziellen Variante sind einzelne Bestandteile anhand eines additiven Verfahrens wie beispielsweise eines dreidimensionalen Druckverfahrens und andere Bestandteile anhand Spritzguss hergestellt.

Die Position des Stössels 13 (und damit des beweglichen Teils 1, 2) wird nach FIG 4 durch einen Sensor 15 aufgezeichnet. Die Ventilsteuereinheit 16 kommuniziert über eine geeignete Schnittstelle, beispielsweise über eine undirektionale oder bidirektionale Schnittstelle, mit dem Sensor 15. Die Ventilsteuereinheit 16 kommuniziert vorzugsweise über ein Kommunikationsbusprotokoll wie beispielsweise ein digitales und / oder verbindungsloses Kommunikationsbusprotokoll mit dem Sensor 15. In einer speziellen Ausführungsform kommuniziert die Ventilsteuereinheit 16 über einen seriellen Feldbus nach ISO 11898-1:2003 mit dem Sensor 15. In einer weiteren speziellen Ausführungsform kommuniziert die Ventilsteuereinheit 16 über Netzwerkkabel mit integrierter Energieversorgung mit dem Sensor 15. Auf diese Weise lässt sich der Sensor 15 durch die Ventilsteuereinheit 16 gleichzeitig auslesen und mit Energie versorgen.

Weiterhin ist vorgesehen, dass der Sensor 15 ein (analoges) Signal in Form von milliVolt oder Volt oder milliAmpere oder Ampere an die Ventilsteuereinheit 16 zurückmeldet. Die Ventilsteuereinheit 16 verfügt dazu über einen Analog-Digital-Wandler. Vorzugsweise ist der Analog-Digital-Wandler der Ventilsteuereinheit 16 integraler Bestandteil des darin enthaltenden Mikroprozessors. Der Analog-Digital-Wandler der Ventilsteuereinheit 16 wandelt so das (analoge) Signal des Sensors 15 in einen digitalen Wert um. Jener digitale Wert kann fortan durch die Ventilsteuereinheit 16 und / oder durch deren Mikroprozessor weiterverarbeitet werden. Der Fachmann zieht weiterhin geeignete (Rausch-)Filter zur Verarbeitung des vom Sensor 15 stammenden Signals in Betracht. Jene Filter können (im Signalpfad) sowohl vor als auch hinter dem Analog-Digital-Wandler angeordnet sein.

Vorliegend ist die Ventilsteuereinheit 16 ausgebildet, das Ventilelement anhand des Aktors 14 zu öffnen und zu schliessen. Zum Öffnen sendet die Ventilsteuereinheit 16 ein Signal und / oder einen Befehl zum Öffnen. Der Aktor 14 empfängt das Signal und / oder den Befehl. Der Aktor 14 öffnet nachfolgend das Ventilelement durch Bewegen des beweglichen Teils 1, 2 (anhand des Stössels 13). In einer speziellen Ausführungsform ist vorgesehen, dass der Aktor 14 nach erfolgter Öffnung des Ventilelementes ein Signal an die Ventilsteuereinheit 16 zurückmeldet. Die Ventilsteuereinheit 16 empfängt das rückgemeldete Signal. Die Ventilsteuereinheit 16 erkennt dann anhand des zurückgemeldeten Signals, dass das Ventilelement geöffnet ist.

Zum Schliessen sendet die Ventilsteuereinheit 16 ein Signal und / oder einen Befehl zum Schliessen. Der Aktor 14 empfängt das Signal. Der Aktor 14 schliesst nachfolgend das Ventilelement durch Bewegen des beweglichen Teils 1, 2 (anhand des Stössels 13). In einer speziellen Ausführungsform ist vorgesehen, dass der Aktor 14 nach erfolgter Schliessung des Ventilelementes ein Signal an die Ventilsteuereinheit 16 zurückmeldet. Die Ventilsteuereinheit 16 empfängt das rückgemeldete Signal. Die Ventilsteuereinheit 16 erkennt dann anhand des zurückgemeldeten Signals, dass das Ventilelement geschlossen ist.

Gemäss einem Aspekt der Offenbarung bestätigt der Aktor 14 gegenüber der Ventilsteuereinheit 16 zudem den Empfang der Signale und / oder Befehle zum Öffnen und / oder Schliessen.

Zusätzlich zur oder anstelle der Rückmeldung durch den Aktor 14 ist auch eine Rückmeldung anhand des Sensors 15 vorgesehen. Dabei fragt die Ventilsteuereinheit 16 einige Zeit nach einem Öffnungsbefehl anhand des (an den Stössel 13 gekoppelten) Sensors 15 die Stellung des beweglichen Teils 1, 2 des Ventilelementes ab. Der Sensor 15 meldet auf die Abfrage durch die Ventilsteuereinheit 16 ein Signal zurück, welches ein Indiz und / oder Mass für die Stellung des beweglichen Teils 1, 2 des Ventilelementes ist. Im Sinne einer Übertastung können dabei mehrere Abfragen an den Sensor 15 und / oder mehrere Rückmeldungen durch den Sensor 15 erfolgen, um Genauigkeit und / oder Auflösung zu verbessern. Ferner können mehrere Abfragen an den Sensor 15 aus Gründen von Redundanz erfolgen.

Gemäss einer Variante der Offenbarung fragt die Ventilsteuereinheit den Sensor 15 innerhalb 1 Sekunde, innerhalb 0.5 Sekunden oder innerhalb 0.1 Sekunden nach dem Signal und / oder Befehl zum Öffnen an den Aktor 14 ab. Gemäss einer verwandten Variante der Offenbarung fragt die Ventilsteuereinheit den Sensor 15 innerhalb 1 Sekunde, innerhalb 0.5 Sekunden oder innerhalb 0.1 Sekunden nach dem Signal und / oder Befehl zum Schliessen an den Aktor 14 ab. Gemäss einer weiteren Variante der Offenbarung fragt die Ventilsteuereinheit den Sensor 15 innerhalb 1 Sekunde, innerhalb 0.5 Sekunden oder innerhalb 0.1 Sekunden nach der Rückmeldung durch den Aktor 14 ab.

Gemäss einer alternativen Ausführungsform ist vorgesehen, dass der Sensor 15 unabhängig von Abfragen durch die Ventilsteuereinheit 16 von sich aus ein Signal, welches ein Indiz und / oder Mass für die Stellung des beweglichen Teils 1, 2 des Ventilelementes ist, an die Ventilsteuereinheit 16 meldet. Insbesondere ist vorgesehen, dass der Sensor 15 eine Änderung der Stellung des Ventilelementes registriert. Der Sensor 15 sendet infolge der Registrierung der Änderung und ohne Abfrage durch die Ventilsteuereinheit 16 ein Signal an die Ventilsteuereinheit 16. Jenes Signal ist ein Indiz und / oder Mass für die Stellung des beweglichen Teils 1, 2 des Ventilelementes.

In einer speziellen Ausführungsform ist vorgesehen, dass der Sensor 15 in den Aktor 14 integriert ist. Insbesondere ist vorgesehen, dass die Ventilsteuereinheit 16 über dieselbe kommunikative Verbindung, beispielsweise über denselben (seriellen) Feldbus, mit dem Sensor 15 und dem Aktor 14 kommuniziert. In einer beispielhaften Anwendung kommuniziert die Ventilsteuereinheit 16 über Lichtwellenleiter mit dem Sensor 15 und / oder mit dem Aktor 14.

Mit der Anordnung der vorliegenden Offenbarung wird eine Ermittlung von Verschleiss des Ventilelementes, insbesondere des elastischen Elements 2, im Betrieb möglich. Dabei wird von einem Ventilelement ausgegangen, welches bereits eine erste Anzahl an Ventilzyklen umfassend Öffnen und Schliessen durchgeführt hat und / oder eine erste Anzahl an Betriebsstunden erfahren hat. Beispielsweise hat das Ventilelement bereits mindestens 100, mindestens 1000 oder mindestens 10000 Ventilzyklen umfassend Öffnen und Schliessen durchgeführt. Entsprechend einem weiteren Beispiel hat das Ventilelement bereits mindestens 10, mindestens 100 oder mindestens 1000 Betriebsstunden gearbeitet.

An dem so gealterten Ventil wird nun mindestens ein Signal durch den Sensor 15 gesendet. Die Ventilsteuereinheit 16 empfängt jenes mindestens eine Signal. Die Ventilsteuereinheit 16 verarbeitet jenes mindestens eine Signal zu einem ersten Messwert der Stellung des beweglichen Teils 1, 2 des Ventilelementes. Typisch umfasst die Verarbeitung jenes mindestens einen ersten Signals eine Wandlung anhand eines Analog-Digital-Wandlers und / oder eine Filterung. Die Ventilsteuereinheit 16 legt den ermittelten Messwert anschliessend in deren Speicher, vorzugsweise in deren nicht-flüchtigen Speicher, ab.

Die Ventilsteuereinheit 16 führt in der Folge eine Anzahl an Ventilzyklen, beispielsweise 1 Ventilzyklus, 2 Ventilzyklen, 5 Ventilzyklen oder 10 Ventilzyklen, durch. Die Ventilzyklen umfassen jeweils Öffnen und Schliessen des Ventilelementes. Dabei ist die Reihenfolge von Öffnen und Schliessen (meist) unerheblich. Das heisst, es kann zunächst geöffnet und anschliessend geschlossen werden oder zunächst geschlossen und anschliessend geöffnet werden.

Die Ventilsteuereinheit 16 kann in der Folge auch eine Anzahl an Betriebsstunden, beispielsweise 1 Betriebsstunde, 2 Betriebsstunden, 5 Betriebsstunden oder 10 Betriebsstunden, arbeiten.

Das Durchführen der Ventilzyklen und / oder das Abarbeiten der Betriebsstunden kann dabei im normalen Betrieb geschehen. In diesem Fall werden Ventilzyklen entsprechend den Erfordernissen der jeweiligen Anwendung, beispielsweise einer Anwendung in einer Brennereinrichtung und / oder einer pneumatischen Steuerung, durchgeführt. Das Durchführen der Ventilzyklen und / oder das Abarbeiten der Betriebsstunden kann auch im Wartungsmodus geschehen, in welchem das Ventil und / oder das Ventilelement der jeweiligen Anwendung nicht zur Verfügung steht.

An dem zusätzlich gealterten Ventil wird nun mindestens ein weiteres Signal durch den Sensor 15 gesendet. Die Ventilsteuereinheit 16 empfängt jenes mindestens eine weitere Signal. Die Ventilsteuereinheit 16 verarbeitet jenes mindestens eine weitere Signal zu einem zweiten Messwert der Stellung des beweglichen Teils 1, 2 des Ventilelementes. Typisch umfasst die Verarbeitung jenes mindestens einen weiteren Signals eine Wandlung anhand eines Analog-Digital-Wandlers und / oder eine Filterung. Vorzugsweise legt die Ventilsteuereinheit 16 den ermittelten zweiten Messwert anschliessend in deren Speicher, insbesondere in deren nicht-flüchtigen Speicher, ab.

Anschliessend liest die Ventilsteuereinheit 16, insbesondere deren verarbeitende Einheit, den ersten Messwert aus dem (nicht-flüchtigen) Speicher ein. Falls erforderlich, liest die Ventilsteuereinheit 16, insbesondere deren verarbeitende Einheit, auch den zweiten Messwert aus dem (nicht-flüchtigen) Speicher ein. Die Ventilsteuereinheit 16, insbesondere deren verarbeitende Einheit, ermittelt nun als (direkte) Funktion des ersten und des zweiten Messwertes und eines Alterungsindikators den Fortschritt der Alterung des Ventilelementes, insbesondere des elastischen Elements 2. Der Alterungsindikator ist dabei typisch die zwischen dem Ermitteln der ersten und der zweiten Messwerte durchgeführte Anzahl an Ventilzyklen oder abgearbeitete Anzahl an Betriebsstunden. Der Alterungsindikator kann auch eine (direkte) Funktion der zwischen dem Ermitteln der ersten und der zweiten Messwerte durchgeführten Anzahl an Ventilzyklen und der abgearbeiteten Anzahl an Betriebsstunden sein. Beispielsweise kann der Alterungsindikator eine (gewichtete) Summe aus durchgeführten Ventilzyklen und abgearbeiteten Betriebsstunden sein.

In einer bevorzugten Ausführungsform ermittelt die (verarbeitende Einheit) der Ventilsteuereinheit 16 die Differenz zwischen dem ersten Messwert und dem zweiten Messwert. Besonders bevorzugt ermittelt die Ventilsteuereinheit 16 den Absolutwert der Differenz zwischen dem ersten Messwert und dem zweiten Messwert. Jene Differenz und / oder deren Absolutwert wird anschliessend bezogen auf den Alterungsindikator. Vorteilhaft wird dabei jene Differenz und / oder deren Absolutwert durch den Alterungsindikator geteilt. Das Ergebnis der Berechnung ist ein Mass für den Fortschritt der Alterung.

Im (nicht-flüchtigen) Speicher der Ventilsteuereinheit 16 ist zusätzlich mindestens ein vorgegebener Schwellwert für den Fortschritt der Alterung hinterlegt. Die (verarbeitende Einheit der) Ventilsteuereinheit 16 liest den mindestens einen vorgegebenen Schwellwert aus dem (nicht-flüchtigen) Speicher ein. Die verarbeitende Einheit vergleicht sodann den ermittelten Fortschritt der Alterung mit dem mindestens einen vorgegebenen Schwellwert. Falls der ermittelte Fortschritt der Alterung eine Alterung anzeigt, welche über dem mindestens einen vorgegebenen Schwellwert liegt, erfolgt eine Ausgabe durch die Ventilsteuereinheit 16.

Im (nicht-flüchtigen) Speicher der Ventilsteuereinheit 16 kann auch zusätzlich mindestens ein weiterer vorgegebener Schwellwert für den Fortschritt der Alterung hinterlegt sein. Der mindestens eine weitere vorgegebene Schwellwert entspricht dabei einer gegenüber dem mindestens einen vorgegebenen Schwellwert fortgeschrittenen Alterung. Die (verarbeitende Einheit der) Ventilsteuereinheit 16 liest den mindestens einen weiteren Schwellwert aus dem (nicht-flüchtigen) Speicher ein. Die verarbeitende Einheit vergleicht sodann den ermittelten Fortschritt der Alterung mit dem mindestens einen weiteren Schwellwert. Falls der ermittelte Fortschritt der Alterung eine Alterung anzeigt, welche über dem mindestens einen weiteren Schwellwert liegt, erfolgt eine weitere Ausgabe durch die Ventilsteuereinheit 16.

Der Fachmann erkennt, dass die hier offenbarte Abfolge aus Alterung, Zustandserfassung, erneuter Alterung, erneuter Zustandserfassung etc beliebig verlängerbar und / oder wiederholbar ist. In einer Variante schliesst sich an das Erfassen des zweiten Messwertes wiederum eine Alterung umfassend mehrere Ventilzyklen und / oder mehrere Betriebsstunden an. Anschliessend wird der Zustand des Ventilelementes anhand eines dritten Messwertes erfasst und es wird ein weiterer Alterungsindikator zum dritten Messwert ermittelt. Allgemein erhält man nach einiger Zeit eine Anzahl an Wertepaaren umfassend einen Messwert der Stellung des beweglichen Teils 1, 2 des Ventilelementes und einen zugehörigen Alterungsindikator. Die Ventilsteuereinheit 16 ist ausgebildet, die Wertepaare in deren (nicht-flüchtigem) Speicher zu hinterlegen.

In einer vorteilhaften Variante lädt die (verarbeitende Einheit) der Ventilsteuereinheit 16 nun die Wertepaare aus Messwert und Alterungsindikator soweit erforderlich aus dem (nicht-flüchtigen) Speicher. Anschliessend berechnet die Ventilsteuereinheit 16 (vorzugsweise ausschliesslich) basierend auf der Anzahl an Wertepaaren eine Regressionsgerade. Vorteilhaft wird dabei anhand linearer Regression berechnet.

Nun nehme die Ventilsteuereinheit 16 nach einigen Ventilzyklen und / oder Betriebsstunden erneut einen Messwert der Stellung des Ventilelementes auf. Die (verarbeitende Einheit) der Ventilsteuereinheit 16 berechne zugleich aus den einigen Ventilzyklen und / oder Betriebsstunden einen erneuten Alterungsindikator. Der erneute Alterungsindikator wird nun gemeinsam mit der berechneten Regressionsgeraden verwendet, um einen Messwert zum erneuten Alterungsindikator zu berechnen und / oder vorherzusagen. Der auf Basis des erneuten Alterungsindikators berechnete und / oder vorhergesagte Messwert wird nun mit dem (gemessenen, tatsächlichen) erneuten Messwert verglichen. Insbesondere wird die Differenz und / oder der Absolutwert der Differenz beider Werte ermittelt. Weicht der vorhergesagte Messwert vom (gemessenen, tatsächlichen) erneuten Messwert um mehr als einen vorgegebenen dritten Schwellwert ab, erfolgt eine Ausgabe durch die Ventilsteuereinheit 16. Der vorgegebene dritte Schwellwert ist vorzugsweise im (nicht-flüchtigen) Speicher der Ventilsteuereinheit 16 hinterlegt. Die verarbeitende Einheit der Ventilsteuereinheit 16 lädt in diesem Fall den vorgegebenen dritten Schwellwert zu Vergleichszwecken aus dem (nicht-flüchtigen) Speicher.

Gemäss einer leicht veränderten Variante werden der erneut gemessene Messwert und dessen Alterungsindikator in die Regressionsgerade miteinbezogen. Das heisst, dass eine veränderte Regressionsgerade berechnet wird auf Basis des erneut gemessenen Messwertes und dessen Alterungsindikator und auf Basis aller vorangegangenen Wertepaare aus Messwert und Alterungsindikator. Die veränderte Regressionsgerade wird nun gemeinsam mit dem Alterungsindikator des erneut gemessenen Messwertes verwendet, um einen veränderten Messwert zu berechnen und / oder vorherzusagen. Der auf Basis des erneuten Alterungsindikators berechnete und / oder vorhergesagte veränderte Messwert wird nun mit dem (gemessenen, tatsächlichen) erneuten Messwert verglichen. Insbesondere wird die Differenz und / oder der Absolutwert der Differenz beider Werte ermittelt. Weicht der berechnete und / oder vorhergesagte Messwert vom (gemessenen, tatsächlichen) erneuten Messwert um mehr als einen vorgegebenen vierten Schwellwert ab, erfolgt eine Ausgabe durch die Ventilsteuereinheit 16. Der vorgegebene vierte Schwellwert ist vorzugsweise im (nicht-flüchtigen) Speicher der Ventilsteuereinheit 16 hinterlegt. Die verarbeitende Einheit der Ventilsteuereinheit 16 lädt in diesem Fall den vorgegebenen vierten Schwellwert zu Vergleichszwecken aus dem (nicht-flüchtigen) Speicher.

In einer Ausführungsform weist die Ventilsteuereinheit 16 eine Anzeige in Form einer Licht-emittierenden Diode auf und kann diese Diode ansteuern. Im Fall einer Ausgabe oder einer weiteren Ausgabe steuert die Ventilsteuereinheit 16 die Licht-emittierende Diode so an, dass diese leuchtet. Gemäss einer speziellen Ausführungsform sind unterschiedliche Dioden, insbesondere Dioden mit unterschiedlichen Farben, für die Ausgabe und für die weitere Ausgabe vorgesehen.

In einer anderen Ausführungsform weist die Ventilsteuereinheit 16 ein Grafikmodul und eine Anzeige in Form eines Bildschirms auf. Im Fall einer Ausgabe oder einer weiteren Ausgabe generiert die Ventilsteuereinheit 16 ein Signal zur Anzeige einer Warnmeldung. Die Ventilsteuereinheit 16 gibt das Signal zur Anzeige einer Warnmeldung an deren Grafikmodul. Das Grafikmodul gibt die Warnung am Bildschirm aus. Gemäss einer speziellen Ausführungsform sind unterschiedliche Warnmeldungen für die Ausgabe und für die weitere Ausgabe vorgesehen.

Bei dem genannten Bildschirm kann es sich insbesondere um einen Schwarz-Weiss-Bildschirm, Graustufen-Bildschirm oder Farbbildschirm mit einer geeigneten Auflösung handeln. Geeignete Auflösungen sind unter anderem 426 x 320 Pixel, 470 x 320 Pixel, 640 x 480 Pixel, 960 x 720 Pixel. Diese Aufzählung erhebt keinen Anspruch auf Vollständigkeit. Der Bildschirm kann beispielsweise als Flüssigkeitskristall-Bildschirm oder als Röhren-Bildschirm oder als elektronisches Papier oder anhand organischer licht-emittierender Dioden ausgeführt sein. Der Bildschirm ist vorzugsweise aussen am Gehäuse des Ventils und / oder der Ventilsteuereinheit 16 angebracht. Die Liste an Realisierungsformen und Auflösungen von Bildschirmen ist nicht abschliessend.

In wiederum einer anderen Ausführungsform weist die Ventilsteuereinheit 16 eine Kommunikationsschnittstelle zur Anbindung an einen Kommunikationsbus auf. Im Fall einer Ausgabe oder einer weiteren Ausgabe generiert die Ventilsteuereinheit 16 ein Signal zur Übermittlung einer Warnmeldung. Die Ventilsteuereinheit 16 gibt das Signal zur Übermittlung einer Warnmeldung an deren Kommunikationsschnittstelle. Die Kommunikationsschnittstelle übermittelt die Warnmeldung über den Kommunikationsbus. Gemäss einer speziellen Ausführungsform sind unterschiedliche Warnmeldungen für die Ausgabe und für die weitere Ausgabe vorgesehen. Vorzugsweise erfolgt die Übermittlung der Warnmeldung über den Kommunikationsbus anhand eines digitalen und / oder verbindungslosen Kommunikationsbusprotokolls.

Zur Kommunikation über den Kommunikationsbus kommen ein geeignetes (digitales und / oder verbindungsloses) Kommunikationsbusprotokoll und / oder ein geeigneter (bidirektionaler) Kommunikationsbus zum Einsatz. Insbesondere ist vorgesehen, dass ein Kommunikationsbusprotokoll und / oder ein Kommunikationsbus zur drahtlosen Übertragung von Informationen zum Einsatz kommen. Im Falle einer drahtlosen Übertragung von Informationen ist zu beachten, dass Ventile und / oder Ventilelemente und / oder Ventilsteuereinheiten 16 vielfach im Keller und / oder hinter Stahlbetondecken eingerichtet sind. Entsprechend werden robuste Verfahren zur drahtlosen Datenübertragung verwendet. Gemäss einer speziellen Ausführungsform überträgt die Kommunikationsschnittstelle der Ventilsteuereinheit 16 deshalb drahtlos unter Verwendung eines speziellen Modulationsverfahrens wie Phasenumtastung oder Quadraturphasenumtastung. Ferner lässt sich die Zuverlässigkeit der drahtlosen Datenübertragung verbessern, indem die Redundanz der zu übertragenden Daten erhöht wird. So kann beispielsweise eine über den Bus zu übertragende Nachricht aus bis zu 2000 Einzelübertragungen zusammengesetzt sein. Mit den genannten Verbesserungen lassen sich die Robustheit und / oder die Reichweite der drahtlosen Datenübertragung optimieren. Weitere Verbesserungen in dieser Hinsicht betreffen die Wahl einer geeigneten Kanalbreite (von 180 kHz) in Verbindung mit einem geeigneten Frequenzband (vorzugsweise um 800 MHz, beispielsweise 868 MHz).

Weiterhin ist vorgesehen, dass zur Kommunikation ein Kommunikationsbusprotokoll mit Verschlüsselung zum Einsatz kommt. In einer speziellen Ausführungsform kommt ein Kommunikationsbusprotokoll aufbauend auf einem (elliptischen) Diffie-Hellman Algorithmus zur Verschlüsselung zum Einsatz.

In noch einer anderen Ausführungsform ist der Aktor 14 ausgebildet, ein Signal zur Verriegelung des Ventilelementes zu empfangen und bei Empfang eines solchen Signals das Ventilelement und / oder sich selbst zu verriegeln. Im verriegelten Zustand ist das Ventilelement und / oder der Aktor 14 blockiert. Das Ventilelement kann also bis zu einer allfälligen Entriegelung nicht mehr Öffnen oder Schliessen. Im Fall einer Ausgabe oder einer weiteren Ausgabe generiert die Ventilsteuereinheit 16 ein Signal zur Verriegelung des Ventilelementes. Die Ventilsteuereinheit 16 gibt das Signal zur Verriegelung des Ventilelementes aus an den Aktor 14. Der Aktor 14 verriegelt bei Empfang eines solchen Signals das Ventilelement und / oder sich selbst.

Teile einer Regeleinrichtung oder eines Verfahrens gemäss der vorliegenden Offenbarung können als Hardware, als Softwaremodul, welches von einer Recheneinheit ausgeführt wird, oder anhand eines Cloud-Rechners, oder anhand einer Kombination der vorgenannten Möglichkeiten realisiert werden. Die Software mag eine Firmware, einen Hardware-Treiber, der innerhalb eines Betriebssystems ausgeführt wird, oder ein Anwendungsprogramm umfassen. Die vorliegende Offenbarung bezieht sich also auch auf ein Rechnerprogramm-Produkt, welches die Merkmale dieser Offenbarung enthält bzw die erforderlichen Schritte ausführt. Bei Realisierung als Software können die beschriebenen Funktionen gespeichert werden als einer oder mehrere Befehle auf einem Rechner-lesbaren Medium. Einige Beispiele Rechner-lesbarer Medien schliessen Arbeitsspeicher (RAM), magnetischen Arbeitsspeicher (MRAM), ausschliesslich lesbaren Speicher (ROM), Flash-Speicher, elektronisch programmierbares ROM (EPROM), elektronisch programmierbares und löschbares ROM (EEPROM), Register einer Recheneinheit, eine Festplatte, eine auswechselbare Speichereinheit, einen optischen Speicher, oder jegliches geeignete Medium ein, auf welches durch einen Rechner oder durch andere IT-Vorrichtungen und Anwendungen zugegriffen werden kann.

Mit anderen Worten, die vorliegende Offenbarung lehrt eine Steuereinheit für eine Ventilanordnung, die Steuereinheit (16) umfassend ein Ausgabegerät, die Ventilanordnung umfassend ein stellbares Ventilelement (1, 2, 3), wobei das stellbare Ventilelement (1, 2, 3) eine geöffnete und eine geschlossene Stellung aufweist, die Ventilanordnung weiterhin umfassend
einen Aktor (14) und einen Sensor (15), wobei der Aktor (14) und der Sensor (15) direkt oder indirekt an das Ventilelement (1, 2, 3) gekoppelt sind, wobei der Aktor (14) und der Sensor (15) kommunikativ mit der Steuereinheit (16) verbunden sind, und die Steuereinheit (16) ausgebildet ist, den Aktor (14) so zu steuern, dass dieser (14) eine Anzahl an Ventilzyklen durchführt, wobei ein Ventilzyklus ein Stellen des Ventilelementes (1, 2, 3) in dessen geöffnete Stellung und ein Stellen des Ventilelementes (1, 2, 3) in dessen geschlossene Stellung umfasst,
wobei der Sensor (15) ausgebildet ist, ein Signal entsprechend einer Stellung des Ventilelementes (1, 2, 3) zu erzeugen,
wobei die Steuereinheit (16) ausgebildet ist, den Aktor (14) so zu steuern, dass dieser (14) eine erste Anzahl an Ventilzyklen mit mindestens einem Ventilzyklus durchführt,
im Anschluss an die Durchführung der ersten Anzahl an Ventilzyklen ein erstes Signal aus dem Sensor (15) auszulesen und zu einem ersten Messwert einer Stellung des Ventilelementes (1, 2, 3) zu verarbeiten, und
im Anschluss an das Auslesen des ersten Signals den Aktor (14) so zu steuern, dass dieser (14) eine zweite Anzahl an Ventilzyklen mit mindestens einem Ventilzyklus durchführt, und
im Anschluss an die Durchführung der zweiten Anzahl an Ventilzyklen ein zweites Signal aus dem Sensor (15) auszulesen und zu einem zweiten Messwert einer Stellung des Ventilelementes (1, 2, 3) zu verarbeiten, und
basierend, insbesondere ausschliesslich basierend, auf dem ersten und dem zweiten Messwert und der zweiten Anzahl an Ventilzyklen einen Abnutzungsgrad zu ermitteln und mit einem vorgegebenen Schwellwert zu vergleichen und
ein vorgegebenes Ausgabesignal anhand des Ausgabegerätes auszugeben, falls der Abnutzungsgrad den vorgegebenen Schwellwert überschreitet.

Die vorliegende Offenbarung lehrt ebenso Ventilanordnung mit einer Steuereinheit (16), die Steuereinheit (16) umfassend ein Ausgabegerät, die Ventilanordnung umfassend ein stellbares Ventilelement (1, 2, 3), wobei das stellbare Ventilelement (1, 2, 3) eine geöffnete und eine geschlossene Stellung aufweist,
die Ventilanordnung weiterhin umfassend einen Aktor (14) und einen Sensor (15), wobei der Aktor (14) und der Sensor (15) direkt oder indirekt an das Ventilelement (1, 2, 3) gekoppelt sind, wobei der Aktor (14) und der Sensor (15) kommunikativ mit der Steuereinheit (16) verbunden sind, und die Steuereinheit (16) ausgebildet ist, den Aktor (14) so zu steuern, dass dieser (14) eine Anzahl an Ventilzyklen durchführt, wobei ein Ventilzyklus ein Stellen des Ventilelementes (1, 2, 3) in dessen geöffnete Stellung und ein Stellen des Ventilelementes (1, 2, 3) in dessen geschlossene Stellung umfasst,
wobei der Sensor (15) ausgebildet ist, ein Signal entsprechend einer Stellung des Ventilelementes (1, 2, 3) zu erzeugen,
wobei die Steuereinheit (16) ausgebildet ist, den Aktor (14) so zu steuern, dass dieser (14) eine erste Anzahl an Ventilzyklen mit mindestens einem Ventilzyklus durchführt,
im Anschluss an die Durchführung der ersten Anzahl an Ventilzyklen ein erstes Signal aus dem Sensor (15) auszulesen und zu einem ersten Messwert einer Stellung des Ventilelementes (1, 2, 3) zu verarbeiten, und
im Anschluss an das Auslesen des ersten Signals den Aktor (14) so zu steuern, dass dieser (14) eine zweite Anzahl an Ventilzyklen mit mindestens einem Ventilzyklus durchführt, und
im Anschluss an die Durchführung der zweiten Anzahl an Ventilzyklen ein zweites Signal aus dem Sensor (15) auszulesen und zu einem zweiten Messwert einer Stellung des Ventilelementes (1, 2, 3) zu verarbeiten, und
basierend, insbesondere ausschliesslich basierend, auf dem ersten und dem zweiten Messwert und der zweiten Anzahl an Ventilzyklen einen Abnutzungsgrad zu ermitteln und mit einem vorgegebenen Schwellwert zu vergleichen und
ein vorgegebenes Ausgabesignal anhand des Ausgabegerätes auszugeben, falls der Abnutzungsgrad den vorgegebenen Schwellwert überschreitet.

Die erste Anzahl an Ventilzyklen umfasst vorzugsweise mindestens einen, mindestens zwei, mindestens fünf oder mindestens zehn Ventilzyklen. Die zweite Anzahl an Ventilzyklen umfasst vorzugsweise mindestens einen, mindestens zwei, mindestens fünf oder mindestens zehn Ventilzyklen. Die dritte Anzahl an Ventilzyklen umfasst vorzugsweise mindestens einen, mindestens zwei, mindestens fünf oder mindestens zehn Ventilzyklen.

Die Steuereinheit (16) und / oder Ventilanordnung umfasst vorzugsweise einen (nicht-flüchtigen) Speicher. Der vorgegebene Schwellwert ist vorzugsweise im (nicht-flüchtigen) Speicher der Steuereinheit (16) hinterlegt. Die Steuereinheit (16) ist vorteilhaft ausgebildet, den vorgegebenen Schwellwert aus dem Speicher der Steuereinheit (16) einzulesen und mit dem ermittelten Abnutzungsgrad zu vergleichen.

Die Steuereinheit (16) und / oder Ventilanordnung umfasst vorzugsweise einen (nicht-flüchtigen) Speicher. Das vorgegebene Ausgabesignal ist vorzugsweise im (nicht-flüchtigen) Speicher der Steuereinheit (16) hinterlegt. Die Steuereinheit (16) ist vorteilhaft ausgebildet, das vorgegebene Ausgabesignal aus dem Speicher der Steuereinheit (16) einzulesen und anhand des Ausgabegerätes auszugeben.

Die Steuereinheit (16) und / oder Ventilanordnung umfasst vorzugsweise einen (nicht-flüchtigen) Speicher. Der vorgegebene Maximalwert ist vorzugsweise im (nicht-flüchtigen) Speicher der Steuereinheit (16) hinterlegt. Die Steuereinheit (16) ist vorteilhaft ausgebildet, den vorgegebenen Maximalwert aus dem Speicher der Steuereinheit (16) einzulesen und mit der ermittelten Abweichung zu vergleichen.

Die Verarbeitung des ersten Signals zu einem ersten Messwert erfolgt vorzugsweise anhand eines Analog-Digital-Wandlers und / oder anhand eines Filters. Die Verarbeitung des zweiten Signals zu einem zweiten Messwert erfolgt vorzugsweise anhand eines Analog-Digital-Wandlers und / oder anhand eines Filters. Die Verarbeitung des dritten Signals zu einem dritten Messwert erfolgt vorzugsweise anhand eines Analog-Digital-Wandlers und / oder anhand eines Filters. Die Steuereinheit ist vorteilhaft als Mikroprozessor ausgeführt. Der Analog-Digital-Wandler und / oder der Filter ist vorzugsweise in den Mikroprozessor integriert. Der Aktor (14) ist vorzugsweise über einen Digital-Analog-Wandler mit der Steuereinheit (16) kommunikativ verbunden. Der Digital-Analog-Wandler ist vorteilhaft in den Mikroprozessor der Steuereinheit (16) integriert.

Das Auslesen eines ersten Signals und / oder eines zweiten Signals aus dem Sensor (15) erfolgt vorzugsweise mit Übertastung, beispielsweise mit zweifacher, vierfacher, achtfacher oder sechzehnfacher Übertastung.

Die vorliegende Offenbarung lehrt weiterhin eine der vorgenannten Steuereinheiten, wobei die Steuereinheit (16) ausgebildet ist, eine Messwert-Differenz aus dem ersten und dem zweiten Messwert zu berechnen und basierend, insbesondere ausschliesslich basierend, auf der berechneten Messwert-Differenz und der zweiten Anzahl an Ventilzyklen einen Abnutzungsgrad zu ermitteln.

Die vorliegende Offenbarung lehrt weiterhin eine der vorgenannten Steuereinheiten und / oder Ventilanordnungen, wobei die Steuereinheit (16) ausgebildet ist, einen Betrag einer Differenz aus dem ersten und dem zweiten Messwert zu berechnen und basierend, insbesondere ausschliesslich basierend, auf dem berechneten Betrag und der zweiten Anzahl an Ventilzyklen einen Abnutzungsgrad zu ermitteln.

Die vorliegende Offenbarung lehrt weiterhin eine der vorgenannten Steuereinheiten und / oder Ventilanordnungen, wobei die Steuereinheit (16) ausgebildet ist, einen Belastungs-Kennwert als (direkte) Funktion der zweiten Anzahl an Ventilzyklen zu berechnen und basierend, insbesondere ausschliesslich basierend, auf dem ersten und dem zweiten Messwert und dem Belastungs-Kennwert einen Abnutzungsgrad zu ermitteln.

Die vorliegende Offenbarung lehrt weiterhin eine der vorgenannten Steuereinheiten und / oder Ventilanordnungen, wobei die Steuereinheit (16) ausgebildet ist, einen Belastungs-Kennwert als (direkte) Funktion der zweiten Anzahl an Ventilzyklen zu berechnen und basierend, insbesondere ausschliesslich basierend, auf dem ersten und dem zweiten Messwert und durch Bezugnahme auf, vorzugsweise durch Division durch, den Belastungs-Kennwert einen Abnutzungsgrad zu ermitteln.

Die vorliegende Offenbarung lehrt weiterhin eine der vorgenannten Steuereinheiten und / oder Ventilanordnungen, wobei die Steuereinheit (16) ausgebildet ist, eine Messwert-Differenz aus dem ersten und dem zweiten Messwert zu berechnen und einen Belastungs-Kennwert als (direkte) Funktion der zweiten Anzahl an Ventilzyklen zu berechnen und basierend, insbesondere ausschliesslich basierend, auf der Messwert-Differenz und dem Belastungs-Kennwert einen Abnutzungsgrad zu ermitteln.

Die vorliegende Offenbarung lehrt weiterhin eine der vorgenannten Steuereinheiten und / oder Ventilanordnungen, wobei die Steuereinheit (16) ausgebildet ist, eine Messwert-Differenz aus dem ersten und dem zweiten Messwert zu berechnen und Belastungs-Kennwert als (direkte) Funktion der zweiten Anzahl an Ventilzyklen zu berechnen und einen Abnutzungsgrad zu ermitteln, indem die Messwert-Differenz auf den Belastungs-Kennwert bezogen wird.

Die Steuereinheit (16) und / oder Ventilanordnung ist vorteilhaft ausgebildet, einen Abnutzungsgrad zu ermitteln und / oder zu berechnen, indem die Messwert-Differenz durch den Belastungs-Kennwert dividiert wird.

Die vorliegende Offenbarung lehrt weiterhin eine der vorgenannten Steuereinheiten und / oder Ventilanordnungen, wobei die Steuereinheit (16) ausgebildet ist, eine Messwert-Differenz aus dem ersten und dem zweiten Messwert zu berechnen und einen Belastungs-Kennwert als (direkte) Funktion der zweiten Anzahl an Ventilzyklen zu berechnen und einen Abnutzungsgrad zu ermitteln, indem die Messwert-Differenz durch den Belastungs-Kennwert dividiert wird.

Die Steuereinheit (16) und / oder Ventilanordnung und ist vorteilhaft ausgebildet, einen Abnutzungsgrad zu ermitteln und / oder zu berechnen, indem der Betrag der Messwert-Differenz durch den Betrag des Belastungs-Kennwerts dividiert wird.

Die vorliegende Offenbarung lehrt weiterhin eine der vorgenannten Steuereinheiten und / oder Ventilanordnungen, wobei die Steuereinheit (16) zusätzlich ausgebildet ist, im Anschluss an das Auslesen des zweiten Signals den Aktor (14) so zu steuern, dass dieser (14) eine dritte Anzahl an Ventilzyklen mit mindestens einem Ventilzyklus durchführt, und
im Anschluss an die Durchführung der dritten Anzahl an Ventilzyklen ein drittes Signal aus dem Sensor (15) auszulesen und zu einem dritten Messwert einer Stellung des Ventilelementes (1, 2, 3) zu verarbeiten, und
basierend, insbesondere ausschliesslich basierend, auf zumindest dem ersten und dem zweiten Messwert und basierend, insbesondere ausschliesslich basierend, auf zumindest der ersten und der zweiten Anzahl an Ventilzyklen ein Modell zu bilden, und
durch Anwendung des Modells auf die dritte Anzahl an Ventilzyklen einen Erwartungswert für den dritten Messwert zu ermitteln, und
eine Abweichung des dritten Messwertes vom Erwartungswert für den dritten Messwert zu ermitteln, und
die ermittelte Abweichung mit einem vorgegebenen Maximalwert für die ermittelte Abweichung zu vergleichen, und
ein vorgegebenes Ausgabesignal anhand des Ausgabegerätes auszugeben, falls die ermittelte Abweichung den vorgegebenen Maximalwert überschreitet.

Die vorliegende Offenbarung lehrt weiterhin eine der vorgenannten Steuereinheiten und / oder Ventilanordnungen, wobei die Steuereinheit (16) zusätzlich ausgebildet ist, im Anschluss an das Auslesen des zweiten Signals den Aktor (14) so zu steuern, dass dieser (14) eine dritte Anzahl an Ventilzyklen mit mindestens einem Ventilzyklus durchführt, und basierend, insbesondere ausschliesslich basierend, auf zumindest dem ersten und dem zweiten Messwert und dem dritten Messwert und basierend, insbesondere ausschliesslich basierend, auf zumindest der ersten Anzahl und der zweiten Anzahl und der dritten Anzahl an Ventilzyklen das Modell zu bilden.

Die vorliegende Offenbarung lehrt weiterhin eine der vorgenannten Steuereinheiten und / oder Ventilanordnungen, wobei die Steuereinheit (16) ausgebildet ist zum Bilden des Modells unter Verwendung linearer Regression.

Anstelle linearer Regression kann beispielsweise die Steuereinheit (16) ausgebildet sein zum Bilden des Modells unter Verwendung (irgendeiner) Regression, insbesondere durch Anpassung an ein Polynom zweiter Ordnung.

Die vorliegende Offenbarung lehrt weiterhin eine der vorgenannten Steuereinheiten und / oder Ventilanordnungen, wobei die Steuereinheit (16) als Ausgabegerät eine durch die Steuereinheit (16) aktivierbare Leuchtanzeige umfasst und die Steuereinheit (16) ausgebildet ist, das vorgegebene Ausgabesignal anhand des Ausgabegerätes auszugeben, indem die Steuereinheit (16) die Leuchtanzeige aktiviert.

Die vorliegende Offenbarung lehrt weiterhin eine der vorgenannten Steuereinheiten und / oder Ventilanordnungen, wobei die Steuereinheit (16) als Ausgabegerät eine Kommunikationsschnittstelle zum Anschluss an einen Kommunikationsbus umfasst und die Steuereinheit (16) ausgebildet ist, das vorgegebene Ausgabesignal anhand der Kommunikationsschnittstelle an den Kommunikationsbus auszugeben.

Die vorliegende Offenbarung lehrt weiterhin eine der vorgenannten Steuereinheiten und / oder Ventilanordnungen, wobei die Steuereinheit (16) als Ausgabegerät eine Kommunikationsschnittstelle zum Anschluss an einen Kommunikationsbus umfasst und die Steuereinheit (16) ausgebildet ist, das vorgegebene Ausgabesignal anhand der Kommunikationsschnittstelle unter Verwendung eines vorgegebenen Modulationsverfahrens an den Kommunikationsbus auszugeben.

Als Modulationsverfahren kommen beispielsweise Phasenumtastung und / oder Quadraturphasenumtastung infrage.

Die vorliegende Offenbarung lehrt weiterhin eine der vorgenannten Steuereinheiten und / oder Ventilanordnungen, wobei das Ausgabegerät der Steuereinheit (16) kommunikativ mit dem Aktor (14) verbunden ist und das vorgegebene Ausgabesignal ein Verriegelungs-Signal ist, bei dessen Empfang durch den Aktor (14) der Aktor (14) verriegelt, und die Steuereinheit (16) ausgebildet ist, das vorgegebene Ausgabesignal anhand des Ausgabegerätes auszugeben, indem die Steuereinheit (16) das Verriegelungs-Signal an den Aktor (14) ausgibt.

Bei Empfang des Verriegelungs-Signals durch den Aktor (14) verriegelt der Aktor (14) vorzugsweise derart, dass er nur durch einen manuellen Eingriff entriegelt werden kann.

Ein Belastungs-Kennwert ist vorzugsweise ein Belastungsgrad. Dabei ist die Belastung ein Stress, der auf eine Anordnung einwirkt. Die Belastung ist (direkte) Ursache einer Alterung. Der Abnutzungsgrad ist vorzugsweise ein Alterungs-Kennwert.

Eine direkte Funktion ist eine Funktion, welche ausschliesslich von den angegebenen Argumenten abhängt. Derweil kann auch eine direkte Funktion von Konstanten, welche in die Berechnung der Funktion einfliessen, abhängen. Solche Konstanten sind Parameter und nicht Argumente. Eine Grösse, die ausschliesslich auf einer anderen Grösse basiert, hängt von keinen anderen Grössen oder Argumenten ab. Es können derweil Konstanten in die Berechnung einfliessen. Solche Konstanten sind Parameter und nicht Argumente.

Das Genannte bezieht sich auf einzelne Ausführungsformen der Offenbarung. Verschiedene Änderungen an den Ausführungsformen können vorgenommen werden ohne von der zu Grunde liegenden Idee abzuweichen und ohne den Rahmen dieser Offenbarung zu verlassen. Der Gegenstand der vorliegenden Offenbarung ist definiert über deren Ansprüche. Es können verschiedenste Änderungen vorgenommen werden ohne den Schutzbereich der folgenden Ansprüche zu verlassen.

### Bezugszeichen

- 1: Ventilteller
- 2: elastisches Element
- 3, 3a, 3b: Ventilsitz
- 4: Ventilöffnung
- 5: Achse
- 6, 6a, 6b: Vertiefungen (infolge Verschleiss)
- 7: Belastungs-Kennwert
- 8: Abnutzungsgrad
- 9: vorgegebener Schwellwert
- 10: vorgegebener Schwellwert
- 11: Regressionsgerade
- 12, 12a, 12b, 12c: Punkte zu verschiedenen Niveaus an Verschleiss
- 13: Stössel
- 14: Aktor
- 15: Sensor
- 16: Steuereinheit

## Patentansprüche

1. Steuereinheit für eine Ventilanordnung, die Steuereinheit (16) umfassend ein Ausgabegerät, die Ventilanordnung umfassend ein stellbares Ventilelement (1, 2, 3), wobei das stellbare Ventilelement (1, 2, 3) eine geöffnete und eine geschlossene Stellung aufweist, die Ventilanordnung weiterhin umfassend
einen Aktor (14) und einen Sensor (15), wobei der Aktor (14) direkt und der Sensor (15) direkt oder indirekt an das Ventilelement (1, 2, 3) gekoppelt sind, wobei der Aktor (14) und der Sensor (15) kommunikativ mit der Steuereinheit (16) verbindbar sind, und die Steuereinheit (16) ausgebildet ist, den Aktor (14) so zu steuern, dass dieser (14) eine Anzahl an Ventilzyklen durchführt, wobei ein Ventilzyklus ein Stellen des Ventilelementes (1, 2, 3) in dessen geöffnete Stellung und ein Stellen des Ventilelementes (1, 2, 3) in dessen geschlossene Stellung umfasst,
wobei der Sensor (15) ausgebildet ist, ein Signal entsprechend einer Stellung des Ventilelementes (1, 2, 3) zu erzeugen,
wobei die Steuereinheit (16) ausgebildet ist, den Aktor (14) so zu steuern, dass dieser (14) eine erste Anzahl an Ventilzyklen mit mindestens einem Ventilzyklus durchführt,
im Anschluss an die Durchführung der ersten Anzahl an Ventilzyklen ein erstes Signal aus dem Sensor (15) auszulesen und zu einem ersten Messwert einer Stellung des Ventilelementes (1, 2, 3) zu verarbeiten, und
im Anschluss an das Auslesen des ersten Signals den Aktor (14) so zu steuern, dass dieser (14) eine zweite Anzahl an Ventilzyklen mit mindestens einem Ventilzyklus durchführt, und
im Anschluss an die Durchführung der zweiten Anzahl an Ventilzyklen ein zweites Signal aus dem Sensor (15) auszulesen und zu einem zweiten Messwert einer Stellung des Ventilelementes (1, 2, 3) zu verarbeiten, und
basierend auf dem ersten und dem zweiten Messwert und der zweiten Anzahl an Ventilzyklen einen Abnutzungsgrad zu ermitteln und mit einem vorgegebenen Schwellwert zu vergleichen und
ein vorgegebenes Ausgabesignal anhand des Ausgabegerätes auszugeben, falls der Abnutzungsgrad den vorgegebenen Schwellwert überschreitet,
**dadurch gekennzeichnet, dass**
das Ausgabegerät der Steuereinheit (16) kommunikativ mit dem Aktor (14) verbindbar ist und das vorgegebene Ausgabesignal ein Verriegelungs-Signal ist, bei dessen Empfang durch den Aktor (14) der Aktor (14) verriegelt, und die Steuereinheit (16) ausgebildet ist, das vorgegebene Ausgabesignal anhand des Ausgabegerätes auszugeben, indem die Steuereinheit (16) das Verriegelungs-Signal an den Aktor (14) ausgibt.

2. Die Steuereinheit gemäss Anspruch 1, wobei die Steuereinheit (16) ausgebildet ist, eine Messwert-Differenz aus dem ersten und dem zweiten Messwert zu berechnen und basierend auf der berechneten Messwert-Differenz und der zweiten Anzahl an Ventilzyklen einen Abnutzungsgrad zu ermitteln.

3. Die Steuereinheit gemäss Anspruch 1, wobei die Steuereinheit (16) ausgebildet ist, einen Betrag einer Differenz aus dem ersten und dem zweiten Messwert zu berechnen und basierend auf dem berechneten Betrag und der zweiten Anzahl an Ventilzyklen einen Abnutzungsgrad zu ermitteln.

4. Die Steuereinheit gemäss Anspruch 1, wobei die Steuereinheit (16) ausgebildet ist, einen Belastungs-Kennwert als Funktion der zweiten Anzahl an Ventilzyklen zu berechnen und basierend auf dem ersten und dem zweiten Messwert und dem Belastungs-Kennwert einen Abnutzungsgrad zu ermitteln.

5. Die Steuereinheit gemäss Anspruch 1, wobei die Steuereinheit (16) ausgebildet ist, einen Belastungs-Kennwert als Funktion der zweiten Anzahl an Ventilzyklen zu berechnen und basierend auf dem ersten und dem zweiten Messwert und durch Bezugnahme auf den Belastungs-Kennwert einen Abnutzungsgrad zu ermitteln.

6. Die Steuereinheit gemäss Anspruch 1, wobei die Steuereinheit (16) ausgebildet ist, eine Messwert-Differenz aus dem ersten und dem zweiten Messwert zu berechnen und einen Belastungs-Kennwert als Funktion der zweiten Anzahl an Ventilzyklen zu berechnen und basierend auf der Messwert-Differenz und dem Belastungs-Kennwert einen Abnutzungsgrad zu ermitteln.

7. Die Steuereinheit gemäss einem der Ansprüche 1 oder 6, wobei die Steuereinheit (16) ausgebildet ist, eine Messwert-Differenz aus dem ersten und dem zweiten Messwert zu berechnen und einen Belastungs-Kennwert als Funktion der zweiten Anzahl an Ventilzyklen zu berechnen und einen Abnutzungsgrad zu ermitteln, indem die Messwert-Differenz auf den Belastungs-Kennwert bezogen wird.

8. Die Steuereinheit gemäss einem der Ansprüche 1 oder 6, wobei die Steuereinheit (16) ausgebildet ist, eine Messwert-Differenz aus dem ersten und dem zweiten Messwert zu berechnen und einen Belastungs-Kennwert als Funktion der zweiten Anzahl an Ventilzyklen zu berechnen und einen Abnutzungsgrad zu ermitteln, indem die Messwert-Differenz durch den Belastungs-Kennwert dividiert wird.

9. Die Steuereinheit gemäss einem der Ansprüche 1 bis 8, wobei die Steuereinheit (16) zusätzlich ausgebildet ist, im Anschluss an das Auslesen des zweiten Signals den Aktor (14) so zu steuern, dass dieser (14) eine dritte Anzahl an Ventilzyklen mit mindestens einem Ventilzyklus durchführt, und
im Anschluss an die Durchführung der dritten Anzahl an Ventilzyklen ein drittes Signal aus dem Sensor (15) auszulesen und zu einem dritten Messwert einer Stellung des Ventilelementes (1, 2, 3) zu verarbeiten, und
basierend auf zumindest dem ersten und dem zweiten Messwert und basierend auf zumindest der ersten und der zweiten Anzahl an Ventilzyklen ein Modell zu bilden, und
durch Anwendung des Modells auf die dritte Anzahl an Ventilzyklen einen Erwartungswert für den dritten Messwert zu ermitteln, und
eine Abweichung des dritten Messwertes vom Erwartungswert für den dritten Messwert zu ermitteln, und
die ermittelte Abweichung mit einem vorgegebenen Maximalwert für die ermittelte Abweichung zu vergleichen, und
ein vorgegebenes Ausgabesignal anhand des Ausgabegerätes auszugeben, falls die ermittelte Abweichung den vorgegebenen Maximalwert überschreitet.

10. Die Steuereinheit gemäss Anspruch 9, wobei die Steuereinheit (16) zusätzlich ausgebildet ist, im Anschluss an das Auslesen des zweiten Signals den Aktor (14) so zu steuern, dass dieser (14) eine dritte Anzahl an Ventilzyklen mit mindestens einem Ventilzyklus durchführt, und basierend auf zumindest dem ersten und dem zweiten Messwert und dem dritten Messwert und basierend auf zumindest der ersten Anzahl und der zweiten Anzahl und der dritten Anzahl an Ventilzyklen das Modell zu bilden.

11. Die Steuereinheit gemäss einem der Ansprüche 9 oder 10, wobei die Steuereinheit (16) ausgebildet ist zum Bilden des Modells unter Verwendung linearer Regression.

12. Die Steuereinheit gemäss einem der Ansprüche 1 bis 11, wobei die Steuereinheit (16) als Ausgabegerät eine durch die Steuereinheit (16) aktivierbare Leuchtanzeige umfasst und die Steuereinheit (16) ausgebildet ist, das vorgegebene Ausgabesignal anhand des Ausgabegerätes auszugeben, indem die Steuereinheit (16) die Leuchtanzeige aktiviert.

13. Die Steuereinheit gemäss einem der Ansprüche 1 bis 12, wobei die Steuereinheit (16) als Ausgabegerät eine Kommunikationsschnittstelle zum Anschluss an einen Kommunikationsbus umfasst und die Steuereinheit (16) ausgebildet ist, das vorgegebene Ausgabesignal anhand der Kommunikationsschnittstelle an den Kommunikationsbus auszugeben.

14. Die Steuereinheit gemäss einem der Ansprüche 1 bis 12, wobei die Steuereinheit (16) als Ausgabegerät eine Kommunikationsschnittstelle zum Anschluss an einen Kommunikationsbus umfasst und die Steuereinheit (16) ausgebildet ist, das vorgegebene Ausgabesignal anhand der Kommunikationsschnittstelle unter Verwendung eines vorgegebenen Modulationsverfahrens an den Kommunikationsbus auszugeben.

## Claims

1. Control unit for a valve arrangement, the control unit (16) comprising an output device, the valve arrangement comprising an adjustable valve element (1, 2, 3), wherein the adjustable valve element (1, 2, 3) has an open and a closed position, the valve arrangement also comprising
an actuator (14) and a sensor (15), wherein the actuator (14) is coupled directly and the sensor (15) is coupled directly or indirectly to the valve element (1, 2, 3), wherein the actuator (14) and the sensor (15) can be communicatively connected to the control unit (16), and the control unit (16) is configured to control the actuator (14) such that it (14) performs a number of valve cycles, wherein a valve cycle comprises adjusting the valve element (1, 2, 3) into its open position and adjusting the valve element (1, 2, 3) into its closed position,
wherein the sensor (15) is configured to generate a signal corresponding to a position of the valve element (1, 2, 3),
wherein the control unit (16) is configured to control the actuator (14) such that it (14) performs a first number of valve cycles with at least one valve cycle,
to read out a first signal from the sensor (15) following performance of the first number of valve cycles and to process it to form a first measured value of a position of the valve element (1, 2, 3), and
to control the actuator (14) following reading out of the first signal such that it (14) performs a second number of valve cycles with at least one valve cycle, and
to read out a second signal from the sensor (15) following performance of the second number of valve cycles and to process it to form a second measured value of a position of the valve element (1, 2, 3), and,
based on the first and the second measured values and the second number of valve cycles, to determine a degree of wear and compare it with a predefined threshold value and
to output a predefined output signal using the output device if the degree of wear exceeds the predefined threshold value,
**characterised in that**
the output device of the control unit (16) can be communicatively connected to the actuator (14) and the predefined output signal is an interlock signal, on receipt of which by the actuator (14), the actuator (14) locks, and the control unit (16) is configured to output the predefined output signal using the output device, by the control unit (16) outputting the interlock signal to the actuator (14).

2. The control unit according to claim 1, wherein the control unit (16) is configured to calculate a measured value difference from the first and the second measured values and to determine a degree of wear based on the calculated measured value difference and the second number of valve cycles.

3. The control unit according to claim 1, wherein the control unit (16) is configured to calculate a value of a difference from the first and the second measured values and to determine a degree of wear based on the calculated value and the second number of valve cycles.

4. The control unit according to claim 1, wherein the control unit (16) is configured to calculate a load characteristic value as a function of the second number of valve cycles and to determine a degree of wear based on the first and the second measured values and the load characteristic value.

5. The control unit according to claim 1, wherein the control unit (16) is configured to calculate a load characteristic value as a function of the second number of valve cycles and to determine a degree of wear based on the first and the second measured values and with reference to the load characteristic value.

6. The control unit according to claim 1, wherein the control unit (16) is configured to calculate a measured value difference from the first and the second measured values and to calculate a load characteristic value as a function of the second number of valve cycles and to determine a degree of wear based on the measured value difference and the load characteristic value.

7. The control unit according to one of claims 1 or 6, wherein the control unit (16) is configured to calculate a measured value difference from the first and the second measured values and to calculate a load characteristic value as a function of the second number of valve cycles and to determine a degree of wear by basing the measured value difference on the load characteristic value.

8. The control unit according to one of claims 1 or 6, wherein the control unit (16) is configured to calculate a measured value difference from the first and the second measured values and a load characteristic value as a function of the second number of valve cycles and to determine a degree of wear by dividing the measured value difference by the load characteristic value.

9. The control unit according to one of claims 1 to 8, wherein the control unit (16) is also designed, following reading out of the second signal, to control the actuator (14) such that it (14) performs a third number of valve cycles with at least one valve cycle, and
to read out a third signal from the sensor (15) following performance of the third number of valve cycles and to process it to form a third measured value of a position of the valve element (1, 2, 3), and
to form a model based on at least the first and the second measured values and based on at least the first and the second number of valve cycles, and
to determine an expected value for the third measured value by applying the model to the third number of valve cycles, and
to determine a deviation of the third measured value from the expected value for the third measured value, and
to compare the determined deviation with a predefined maximum value for the determined deviation, and
to output a predefined output signal using the output device if the determined deviation exceeds the predefined maximum value.

10. The control unit according to claim 9, wherein the control unit (16) is also designed, following reading out of the second signal, to control the actuator (14) such that it (14) performs a third number of valve cycles with at least one valve cycle, and to form the model based on at least the first and the second measured values and the third measured value and based on at least the first number and the second number and the third number of valve cycles.

11. The control unit according to one of claims 9 or 10, wherein the control unit (16) is configured for forming the model using linear regression.

12. The control unit according to one of claims 1 to 11, wherein the control unit (16) as an output device comprises an illuminated display that can be activated by the control unit (16) and the control unit (16) is configured to output the predefined output signal using the output device by the control unit (16) activating the illuminated display.

13. The control unit according to one of claims 1 to 12, wherein the control unit (16) as an output device comprises a communications interface for connection to a communications bus and the control unit (16) is configured to output the predefined output signal to the communications bus using the communications interface.

14. The control unit according to one of claims 1 to 12, wherein the control unit (16) as an output device comprises a communications interface for connection to a communications bus and the control unit (16) is configured to output the predefined output signal to the communications bus with the aid of the communications interface using a predefined modulation method.

## Revendications

1. Unité de commande pour un agencement de soupape, l'unité de commande (16) comprenant un appareil d'émission, l'agencement de soupape comprenant un élément de soupape (1, 2, 3) réglable, dans laquelle l'élément de soupape (1, 2, 3) réglable présente une position ouverte et une position fermée, l'agencement de soupape comprenant en outre un actionneur (14) et un capteur (15), dans laquelle l'actionneur (14) est couplé directement et le capteur (15) est couplé directement ou indirectement à l'élément de soupape (1, 2, 3), l'actionneur (14) et le capteur (15) pouvant être reliés en communication avec l'unité de commande (16), et l'unité de commande (16) est conçue pour commander l'actionneur (14) de telle façon que celui-ci (14) exécute un nombre de cycles de soupape, un cycle de soupape comprenant un placement de l'élément de soupape (1, 2, 3) dans sa position ouverte et un placement de l'élément de soupape (1, 2, 3) dans sa position fermée,
dans laquelle le capteur (15) est conçu pour produire un signal conformément à une position de l'élément de soupape (1, 2, 3),
dans laquelle l'unité de commande (16) est conçue pour commander l'actionneur (14) de telle façon que celui-ci (14) exécute un premier nombre de cycles de soupape avec au moins un cycle de soupape,
à la suite de l'exécution du premier nombre de cycles de soupapes, pour lire un premier signal venant du capteur (15) et pour le traiter en une première valeur de mesure d'une position de l'élément de soupape (1, 2, 3), et
à la suite de la lecture du premier signal, pour commander l'actionneur (14) de telle façon que celui-ci (14) exécute un deuxième nombre de cycles de soupape avec au moins un cycle de soupape, et
à la suite de l'exécution du deuxième nombre de cycles de soupapes, pour lire un deuxième signal venant du capteur (15) et pour le traiter en une deuxième valeur de mesure d'une position de l'élément de soupape (1, 2, 3), et
pour déterminer un degré d'usure et le comparer à une valeur seuil prédéfinie en se basant sur les première et deuxième valeurs de mesure et le deuxième nombre de cycles de soupape, et
pour émettre un signal d'émission à l'aide de l'appareil d'émission, si le degré d'usure dépasse la valeur seuil prédéfinie,
**caractérisée en ce que**
l'appareil d'émission de l'unité de commande (16) peut être relié en communication avec l'actionneur (14) et le signal d'émission prédéfini est un signal de verrouillage à la réception duquel par l'actionneur (14), l'actionneur (14) verrouille, et l'unité de commande (16) est conçue pour émettre le signal d'émission prédéfini à l'aide de l'appareil d'émission, l'unité d'émission (16) envoyant le signal de verrouillage à l'actionneur (14).

2. L'unité de commande selon la revendication 1, dans laquelle l'unité de commande (16) est conçue pour calculer une différence de valeurs de mesure à partir des première et deuxième valeurs de mesure et pour déterminer un degré d'usure en se basant sur la différence de valeurs de mesure calculée et le deuxième nombre de cycles de soupape.

3. L'unité de commande selon la revendication 1, dans laquelle l'unité de commande (16) est conçue pour calculer une valeur d'une différence à partir des première et deuxième valeurs de mesure et pour déterminer un degré d'usure en se basant sur la valeur calculée et le deuxième nombre de cycles de soupape.

4. L'unité de commande selon la revendication 1, dans laquelle l'unité de commande (16) est conçue pour calculer une valeur caractéristique de sollicitation en tant que fonction du deuxième nombre de cycles de soupape et pour déterminer un degré d'usure en se basant sur les première et deuxième valeurs de mesure et la valeur caractéristique de sollicitation.

5. L'unité de commande selon la revendication 1, dans laquelle l'unité de commande (16) est conçue pour calculer une valeur caractéristique de sollicitation en tant que fonction du deuxième nombre de cycles de soupape et pour déterminer un degré d'usure en se basant sur les première et deuxième valeurs de mesure et en se rapportant à la valeur caractéristique de sollicitation.

6. L'unité de commande selon la revendication 1, dans laquelle l'unité de commande (16) est conçue pour calculer une différence de valeurs de mesure à partir des première et deuxième valeurs de mesure et une valeur caractéristique de sollicitation en tant que fonction du deuxième nombre de cycles de soupape et pour déterminer un degré d'usure en se basant sur la différence de valeurs de mesure et la valeur caractéristique de sollicitation.

7. L'unité de commande selon l'une des revendications 1 ou 6, dans laquelle l'unité de commande (16) est conçue pour calculer une différence de valeurs de mesure à partir des première et deuxième valeurs de mesure et une valeur caractéristique de sollicitation en tant que fonction du deuxième nombre de cycles de soupape et pour déterminer un degré d'usure, en rapportant la différence de valeurs de mesure à la valeur caractéristique de sollicitation.

8. L'unité de commande selon l'une des revendications 1 ou 6, dans laquelle l'unité de commande (16) est conçue pour calculer une différence de valeurs de mesure à partir des première et deuxième valeurs de mesure et une valeur caractéristique de sollicitation en tant que fonction du deuxième nombre de cycles de soupape et pour déterminer un degré d'usure, la différence de valeurs de mesure étant divisée par la valeur caractéristique de sollicitation.

9. L'unité de commande selon l'une des revendications 1 à 8, dans laquelle l'unité de commande (16) est en outre conçue, à la suite de la lecture du deuxième signal, pour commander l'actionneur (14) de telle façon que celui-ci (14) exécute un troisième nombre de cycles de soupape avec au moins un cycle de soupape, et
à la suite de l'exécution du troisième nombre de cycles de soupape, pour lire un troisième signal à partir du capteur (15) et le traiter en une troisième valeur de mesure d'une position de l'élément de soupape (1, 2, 3),
pour former un modèle en se basant sur au moins les première et deuxième valeurs de mesure et en se basant sur au moins les premier et deuxième nombres de cycles de soupape, et
pour déterminer une valeur escomptée pour la troisième valeur de mesure par l'application du modèle sur le troisième nombre de cycles de soupapes, et
pour déterminer un écart de la troisième valeur de mesure par rapport à la valeur escomptée pour la troisième valeur de mesure, et
pour comparer l'écart déterminé à une valeur maximale prédéfinie pour l'écart déterminé, et
pour émettre un signal d'émission prédéfini à l'aide de l'appareil d'émission, si l'écart déterminé dépasse la valeur maximale prédéfinie.

10. L'unité de commande selon la revendication 9, dans laquelle l'unité de commande (16) est en outre conçue, à la suite de la lecture du deuxième signal, pour commander l'actionneur (14) de telle façon que celui-ci (14) exécute un troisième nombre de cycles de soupape avec au moins un cycle de soupape, et pour former le modèle en se basant sur au moins les première et deuxième valeurs de mesure et la troisième valeur de mesure et en se basant sur au moins les premier et deuxième nombres et le troisième nombre de cycles de soupape.

11. L'unité de commande selon l'une des revendications 9 ou 10, dans laquelle l'unité de commande (16) est conçue pour former le modèle en utilisant la régression linéaire.

12. L'unité de commande selon l'une des revendications 1 à 11, dans laquelle l'unité de commande (16) comprend en tant qu'appareil d'émission, un voyant lumineux pouvant être activé par l'unité de commande (16) et l'unité de commande (16) est conçue pour émettre le signal d'émission prédéfini à l'aide de l'appareil d'émission, l'unité de commande (16) activant le voyant lumineux.

13. L'unité de commande selon l'une des revendications 1 à 12, dans laquelle l'unité de commande (16) comprend en tant qu'appareil d'émission, une interface de communication pour le raccordement à un bus de communication et l'unité de commande (16) est conçue pour envoyer le signal d'émission prédéfini au bus de communication à l'aide de l'interface de communication.

14. L'unité de commande selon l'une des revendications 1 à 12, dans laquelle l'unité de commande (16) comprend en tant qu'appareil d'émission, une interface de communication pour le raccordement à un bus de communication et l'unité de commande (16) est conçue pour envoyer au bus de communication le signal d'émission prédéfini à l'aide de l'interface de communication en employant un procédé de modulation prédéfini.
